# EUROPEAN PATENT APPLICATION

(11) **EP 4 509 957 A1**
(43) Date of publication of application: **19.02.2025**
(21) Application number: 23841867.7
(22) Date of filing: 12.05.2023
(51) Int. Cl.: G06F 1/32

(54) **IMAGE DISPLAY METHOD AND RELATED APPARATUS**

(30) Priority: 21.07.2022 CN 202210868302
(71) Applicant: Honor Device Co., Ltd., Shenzhen, Guangdong 518040 (CN)
(72) Inventor: LI, Deng, Shenzhen, Guangdong 518040 (CN); LI, Fei, Shenzhen, Guangdong 518040 (CN)
(74) Representative: Beder, Jens
(86) International application number: PCT/CN2023/093741
(87) International publication number: WO 2024/016798

(57) **Abstract**

An image display method and a related apparatus provided in embodiments of this application are applied to the field of terminal technologies. A first application and a second application are applications running in a foreground of an electronic device, and a first rendering priority of the first application is determined based on a first initial rendering priority of the first application, whether the first application corresponds to a focus window, and/or an application switching type of the first application. A second rendering priority of the second application is determined based on a second initial rendering priority of the second application, whether the second application corresponds to a focus window, and/or an application switching type of the second application. The first rendering priority of the first application is compared with the second rendering priority of the second application. When the first rendering priority is lower than the second rendering priority, for the first application, a frequency of sending a Vsync signal is decreased or sending a Vsync signal is stopped; and for the second application, an original frequency of sending a Vsync signal is maintained, thereby improving smoothness of a foreground application with a relatively high rendering priority and improving user experience.

## Description

This application claims priority to Chinese Patent Application No. 202210868302.5, filed with China National Intellectual Property Administration on July 21, 2022 and entitled "IMAGE DISPLAY METHOD AND RELATED APPARATUS", which is incorporated herein by reference in its entirety.

### TECHNICAL FIELD

This application relates to the field of terminal technologies, and in particular, to an image display method and a related apparatus.

### BACKGROUND

The development of technologies is accompanied with more diversified functions supported by electronic devices. For example, more electronic devices support a plurality of foreground applications whose scenario includes application switching, a floating window display, a split-screen display, or the like. In addition, application developers may also obtain more application characteristics through iteration, for example, a picture-in-picture characteristic of a video application.

However, the plurality of foreground applications put heavy rendering tasks on a system, causing excessive system load and freezing, and affecting user experience.

### SUMMARY

Embodiments of this application provide an image display method and a related apparatus, which are applied to an electronic device. For a foreground application with a relatively low rendering priority, a frequency of sending a Vsync signal is decreased or sending a Vsync signal is stopped, thereby improving smoothness of a foreground application with a relatively high rendering priority, and improving user experience.

According to a first aspect, an embodiment of this application provides an image display method, applied to an electronic device, where the method includes: determining a first rendering priority of a first application based on a first initial rendering priority of the first application, whether the first application corresponds to a focus window, and/or an application switching type of the first application, where the first initial rendering priority is related to the application type of the first application and/or rendering load of the first application, and the application switching type includes a switched-out application or a switched-in application; determining a second rendering priority of a second application based on a second initial rendering priority of the second application, whether the second application corresponds to a focus window, and/or an application switching type of the second application, where the second initial rendering priority is related to the application type of the second application and/or rendering load of a to-be-displayed interface of the second application; and the first application and the second application are applications running in a foreground of the electronic device; when the first rendering priority is lower than the second rendering priority, sending a vertical synchronization signal Vsync signal to the first application at a first frequency, or stopping sending a Vsync signal to the first application; and sending a Vsync signal to the second application at a second frequency, where the first frequency is less than the second frequency; compositing a rendered image in the first application with a rendered image in the second application, to obtain a target image; and displaying the target image.

In this case, the first rendering priority of the first application is compared with the second rendering priority of the second application. For a foreground application with a relatively low rendering priority, a frequency of sending a Vsync signal is decreased or sending a Vsync signal is stopped; and for a foreground application with a relatively high rendering priority, an original frequency of sending a Vsync signal is maintained, thereby improving smoothness of the foreground application with the relatively high rendering priority, and improving user experience.

Optionally, the electronic device is in a foreground application switching scenario, the first application is a switched-out application, and the second application is a switched-in application; the determining a first rendering priority of a first application includes: determining the first rendering priority of the first application based on the first initial rendering priority of the first application and the application switching type of the first application; and the determining a second rendering priority of a second application includes: determining the second rendering priority of the second application based on the second initial rendering priority of the second application and the application switching type of the second application.

In this case, when the electronic device is in the foreground application switching scenario, the first rendering priority of the first application is determined based on the first initial rendering priority of the first application and the application switching type of the first application. The second rendering priority of the second application is determined based on the second initial rendering priority of the second application and the application switching type of the second application, so that the first rendering priority can be compared with the second rendering priority, to determine a rendering control method for the first application and the second application.

Optionally, the determining the first rendering priority of the first application based on the first initial rendering priority of the first application and the application switching type of the first application includes: decreasing the first initial rendering priority of the first application based on that the first application is the switched-out application, to obtain the first rendering priority of the first application; and the determining the second rendering priority of the second application based on the second initial rendering priority of the second application and the application switching type of the second application includes: increasing the second initial rendering priority of the second application based on that the second application is the switched-in application, to obtain the second rendering priority of the second application.

In this case, to improve smoothness of an application switched from a background to a foreground, the first initial rendering priority of the first application is decreased based on that the first application is the switched-out application, to obtain the first rendering priority of the first application. The second initial rendering priority of the second application is increased based on that the second application is the switched-in application, to obtain the second rendering priority of the second application, so that the first rendering priority can be compared with the second rendering priority, to determine a rendering control method for the first application and the second application.

Optionally, the electronic device is in a split-screen display scenario, and the first application and the second application are respectively displayed in two different windows; the determining a first rendering priority of a first application includes: determining the first rendering priority of the first application based on the first initial rendering priority of the first application and whether the first application corresponds to the focus window; and the determining a second rendering priority of a second application includes: determining the second rendering priority of the second application based on the second initial rendering priority of the second application and whether the second application corresponds to the focus window.

In this case, the first rendering priority of the first application is determined based on the first initial rendering priority of the first application and whether the first application corresponds to the focus window. The second rendering priority of the second application is determined based on the second initial rendering priority of the second application and whether the second application corresponds to the focus window, so that the first rendering priority can be compared with the second rendering priority, to determine a rendering control method for the first application and the second application.

Optionally, the determining the first rendering priority of the first application based on the first initial rendering priority of the first application and whether the first application corresponds to the focus window includes: decreasing the first initial rendering priority of the first application based on that the first application corresponds to a non-focus window, to obtain the first rendering priority of the first application; and the determining the second rendering priority of the second application based on the second initial rendering priority of the second application and whether the second application corresponds to the focus window includes: increasing the second initial rendering priority of the second application based on that the second application corresponds to the focus window, to obtain the second rendering priority of the second application.

In this case, the focus window is a window that the user focuses more on. To improve smoothness of the focus window, the first initial rendering priority of the first application is decreased based on that the first application corresponds to the non-focus window, to obtain the first rendering priority of the first application. The second initial rendering priority of the second application is increased based on that the second application corresponds to the focus window, to obtain the second rendering priority of the second application.

Optionally, the electronic device is in a floating window display scenario; the determining a first rendering priority of a first application includes: determining the first rendering priority of the first application based on the first initial rendering priority of the first application and whether the first application corresponds to the focus window; and the determining a second rendering priority of a second application includes: determining the second rendering priority of the second application based on the second initial rendering priority of the second application and whether the second application corresponds to the focus window.

In this case, the first rendering priority of the first application is determined based on the first initial rendering priority of the first application and whether the first application corresponds to the focus window. The second rendering priority of the second application is determined based on the second initial rendering priority of the second application and whether the second application corresponds to the focus window, so that the first rendering priority can be compared with the second rendering priority, to determine a rendering control method for the first application and the second application.

Optionally, the determining the first rendering priority of the first application based on the first initial rendering priority of the first application and whether the first application corresponds to the focus window includes: decreasing the first initial rendering priority of the first application based on that the first application corresponds to a non-focus window, to obtain the first rendering priority of the first application; and the determining the second rendering priority of the second application based on the second initial rendering priority of the second application and whether the second application corresponds to the focus window includes: increasing the second initial rendering priority of the second application based on that the second application corresponds to the focus window, to obtain the second rendering priority of the second application.

In this case, the focus window is a window that the user focuses more on. To improve smoothness of the focus window, the first initial rendering priority of the first application is decreased based on that the first application corresponds to the non-focus window, to obtain the first rendering priority of the first application. The second initial rendering priority of the second application is increased based on that the second application corresponds to the focus window, to obtain the second rendering priority of the second application.

Optionally, before the determining the first rendering priority of the first application and determining the second rendering priority of the second application, the method further includes: obtaining a rendering area of the first application and a rendering area of the second application; and the determining the first rendering priority of the first application and the second rendering priority of the second application includes: when the rendering area of the first application and the rendering area of the second application are both greater than a first preset value, determining the first rendering priority of the first application, and determining the second rendering priority of the second application.

In this case, when the rendering area of the first application and the rendering area of the second application are both greater than the first preset value, the first rendering priority of the first application and the second rendering priority of the second application are determined. Rendering control is performed on the first application and the second application based on the first rendering priority and the second rendering priority, thereby decreasing rendering load of a system, and improving application smoothness.

Optionally, before the determining the first rendering priority of the first application and determining the second rendering priority of the second application, the method further includes: obtaining window information of applications running in the foreground and/or switching information of the applications running in the foreground; and determining, based on the window information of the applications running in the foreground and/or the switching information of the applications running in the foreground, that the applications running in the foreground include the first application and the second application.

In this case, it may be determined, based on the window information of the applications running in the foreground and/or the switching information of the applications running in the foreground, that the applications running in the foreground include the first application and the second application. When it is determined that the applications running in the foreground include the first application and the second application, the first rendering priority of the first application is compared with the second rendering priority of the second application, to perform rendering control on the first application and the second application, thereby improving application smoothness. When it is determined that the application running in the foreground includes the first application instead of the second application, the first rendering priority of the first application does not need to be obtained, so that system resources can be saved.

According to a second aspect, an embodiment of this application provides an image display method, applied to an electronic device, where the method includes: displaying a multitasking interface, where the multitasking interface includes a first application and a second application; receiving a first operation of a user, where the first operation is used to switch the first application in and the second application out; in response to the first operation, sending a vertical synchronization signal Vsync signal to the first application at a first frequency, or stopping sending a Vsync signal to the first application; in response to the first operation, sending a Vsync signal to the second application at a second frequency, where the first frequency is less than the second frequency; compositing a rendered image in the first application with a rendered image in the second application, to obtain a target image; and displaying the target image.

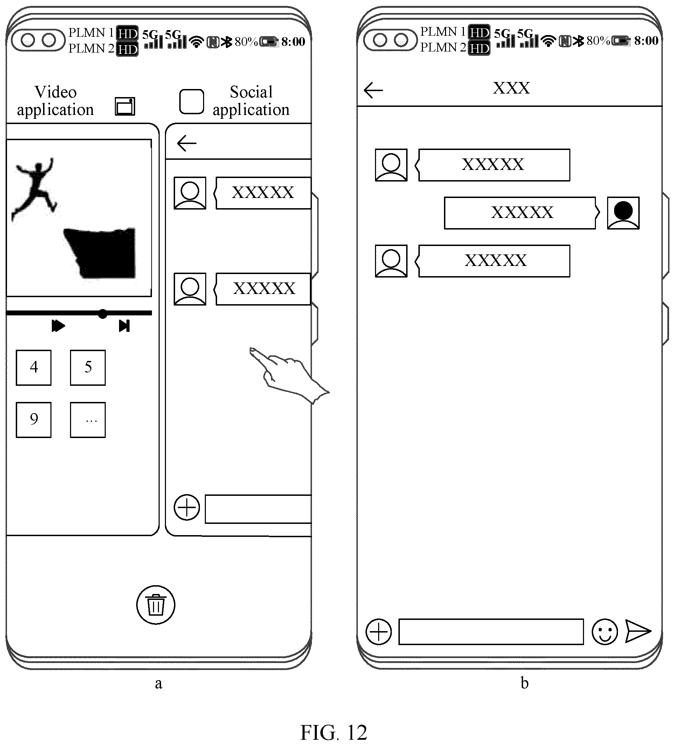

The first operation may be a click operation in FIG. 12, the first application may be a video application in FIG. 12, and the second application may be a social application in FIG. 12.

In this case, a Vsync signal is sent to a switched-in application at an original frequency; and a frequency of sending a Vsync signal to a switched-out application is decreased, or sending a Vsync signal to a switched-out application is stopped, so that the switched-in application can have sufficient rendering resources, thereby improving smoothness of the switched-in application.

According to a third aspect, an embodiment of this application provides an image display method, applied to an electronic device, where the method includes: displaying a first interface, where the first interface includes a first application; receiving a second operation performed by a user to display the first application and a second application in a split-screen manner; in response to the second operation, displaying the first application in a first window and the second application in a second window; receiving a third operation on the second application in the second window; in response to the third operation, sending a Vsync signal to the first application at a first frequency, or stopping sending a Vsync signal to the first application; in response to the second operation, sending a Vsync signal to the second application at a second frequency, where the first frequency is less than the second frequency; compositing a rendered image in the first application with a rendered image in the second application, to obtain a target image; and displaying the target image.

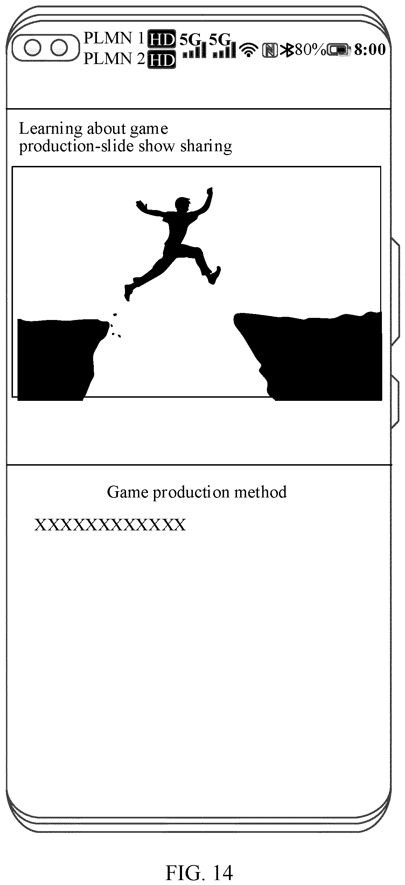

The first application may be a word application shown in FIG. 14, the second application may be a PPT application shown in FIG. 14, the first window may be a window corresponding to the word application, the second window may be a window corresponding to the PPT application, and the third operation may be an operation of the user creating a PPT in the PPT application corresponding to the second window.

In this case, a Vsync signal is sent to an application in a focus window at an original frequency; and a frequency of sending a Vsync signal to an application in a non-focus window is decreased, or sending a Vsync signal to an application in a non-focus window is stopped, so that the application in the focus window can have sufficient rendering resources, thereby improving smoothness of the application in the focus window.

According to a fourth aspect, an embodiment of this application provides an image display method, applied to an electronic device, where the method includes: displaying a first application in full screen; receiving a fourth operation for triggering a second application; in response to the fourth operation, displaying the second application in full screen, and displaying the first application on the second application by using a floating window; receiving a fifth operation on the second application; in response to the fifth operation, sending a vertical synchronization signal Vsync signal to the first application at a first frequency, or stopping sending a Vsync signal to the first application; in response to the fifth operation, sending a Vsync signal to the second application at a second frequency, where the first frequency is less than the second frequency; compositing a rendered image in the first application with a rendered image in the second application, to obtain a target image; and displaying the target image.

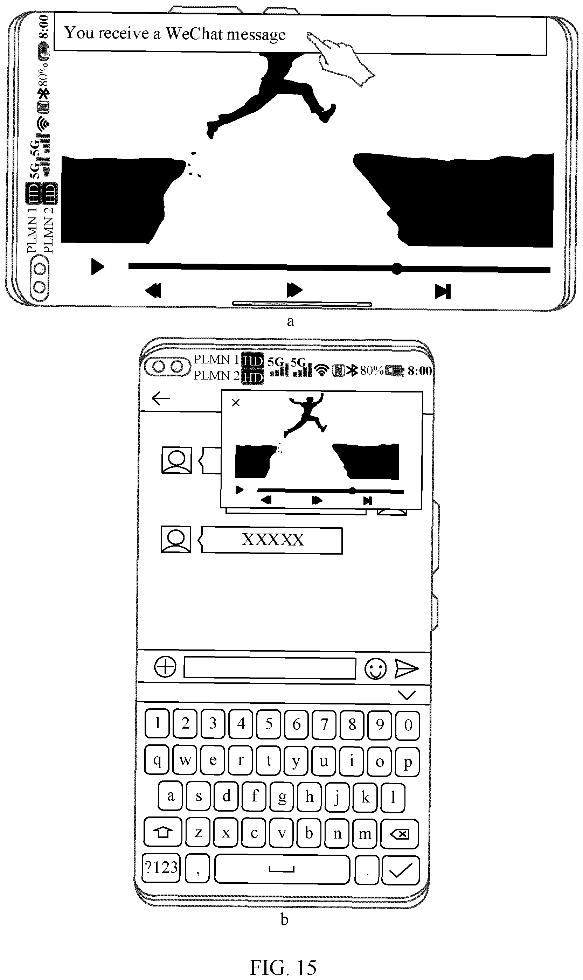

The first application may be a video application shown in a in FIG. 15, the second application may be a social application shown in b in FIG. 15, the fourth operation may be an operation, of clicking a message reminder of the social application, shown in a in FIG. 15, and the fifth operation may be an operation, of replying to a message, shown in b in FIG. 15.

In this case, a Vsync signal is sent to an application in a focus window at an original frequency; and a frequency of sending a Vsync signal to an application in a non-focus window is decreased, or sending a Vsync signal to an application in a non-focus window is stopped, so that the application in the focus window can have sufficient rendering resources, thereby improving smoothness of the application in the focus window.

According to a fifth aspect, an embodiment of this application provides an image display method, applied to an electronic device, where the method includes: receiving a sixth operation of a user returning from a first application to a desktop application; in response to the sixth operation, stopping sending a Vsync signal to the first application, sending a vertical synchronization signal Vsync signal to the first application at a first frequency, or stopping sending a Vsync signal to the first application; in response to the sixth operation, sending a Vsync signal to the second application at a second frequency, where the first frequency is less than the second frequency; compositing a rendered image in the first application with a rendered image in the desktop application, to obtain a target image; and displaying the target image.

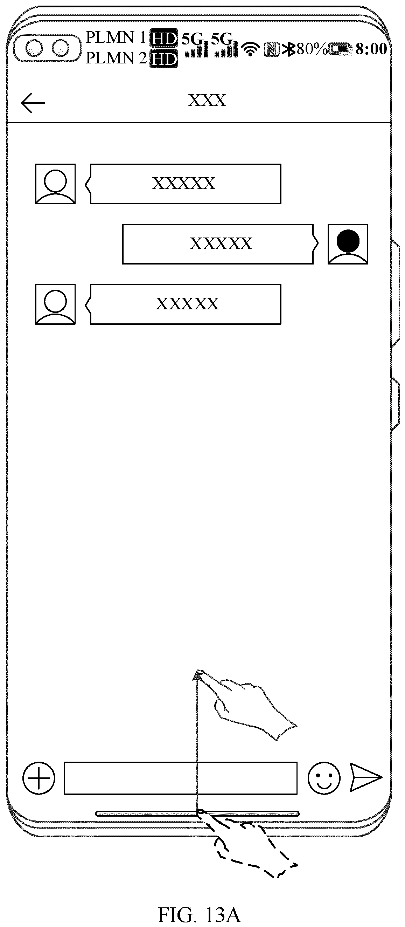

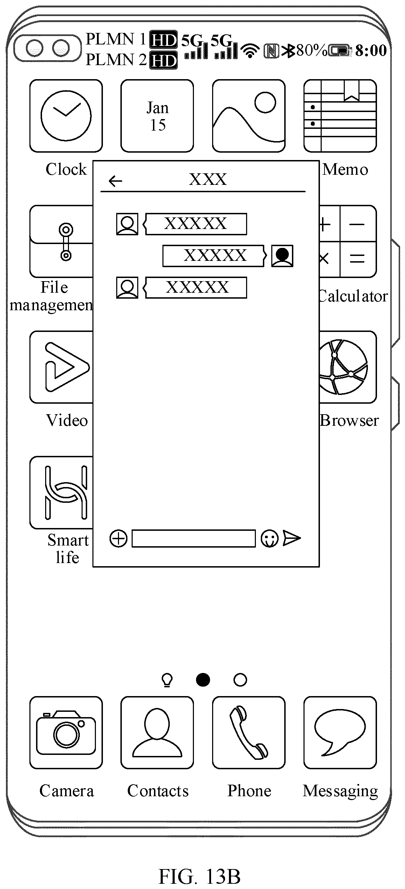

The first application may be a social application shown in FIG. 13A, the second application may be a desktop application shown in FIG. 13B, and the sixth operation may be an operation, of swiping up to return to a desktop, shown in FIG. 13A.

In this case, a Vsync signal is sent to a switched-in application at an original frequency; and a frequency of sending a Vsync signal to a switched-out application is decreased, or sending a Vsync signal to a switched-out application is stopped, so that the switched-in application can have sufficient rendering resources, thereby improving smoothness of the switched-in application.

According to a sixth aspect, an embodiment of this application provides an electronic device, where the electronic device includes: a touchscreen, where the touchscreen includes a touch panel and a display screen; one or more processors; a memory; a plurality of application programs; and one or more computer programs, where the one or more computer programs are stored in the memory, the one or more computer programs include instructions, and when the instructions are executed by the electronic device, the electronic device is enabled to perform the following steps: determining a first rendering priority of a first application based on a first initial rendering priority of the first application, whether the first application corresponds to a focus window, and/or an application switching type of the first application, where the first initial rendering priority is related to the application type of the first application and/or rendering load of the first application, and the application switching type includes a switched-out application or a switched-in application; determining a second rendering priority of a second application based on a second initial rendering priority of the second application, whether the second application corresponds to a focus window, and/or an application switching type of the second application, where the second initial rendering priority is related to the application type of the second application and/or rendering load of a to-be-displayed interface of the second application; and the first application and the second application are applications running in a foreground of the electronic device; when the first rendering priority is lower than the second rendering priority, sending a vertical synchronization signal Vsync signal to the first application at a first frequency, or stopping sending a Vsync signal to the first application; and sending a Vsync signal to the second application at a second frequency, where the first frequency is less than the second frequency; compositing a rendered image in the first application with a rendered image in the second application, to obtain a target image; and displaying the target image.

According to a seventh aspect, an embodiment of this application provides an electronic device, where the electronic device includes: a touchscreen, where the touchscreen includes a touch panel and a display screen; one or more processors; a memory; and a plurality of application programs; and one or more computer programs, where the one or more computer programs are stored in the memory, the one or more computer programs include instructions, and when the instructions are executed by the electronic device, the electronic device is enabled to perform the following steps: displaying a multitasking interface, where the multitasking interface includes a first application and a second application; receiving a first operation of a user, where the first operation is used to switch the first application in and the second application out; in response to the first operation, sending a vertical synchronization signal Vsync signal to the first application at a first frequency, or stopping sending a Vsync signal to the first application; in response to the first operation, sending a Vsync signal to the second application at a second frequency, where the first frequency is less than the second frequency; compositing a rendered image in the first application with a rendered image in the second application, to obtain a target image; and displaying the target image.

According to an eighth aspect, an embodiment of this application provides an electronic device, where the electronic device includes: a touchscreen, where the touchscreen includes a touch panel and a display screen; one or more processors; a memory; and a plurality of application programs; and one or more computer programs, where the one or more computer programs are stored in the memory, the one or more computer programs include instructions, and when the instructions are executed by the electronic device, the electronic device is enabled to perform the following steps: displaying a first interface, where the first interface includes a first application; receiving a second operation performed by a user to display the first application and a second application in a split-screen manner; in response to the second operation, displaying the first application in a first window and the second application in a second window; receiving a third operation on the second application in the second window; in response to the third operation, sending a vertical synchronization signal Vsync signal to the first application at a first frequency, or stopping sending a Vsync signal to the first application; in response to the second operation, sending a Vsync signal to the second application at a second frequency, where the first frequency is less than the second frequency; compositing a rendered image in the first application with a rendered image in the second application, to obtain a target image; and displaying the target image.

According to a ninth aspect, an embodiment of this application provides an electronic device, where the electronic device includes: a touchscreen, where the touchscreen includes a touch panel and a display screen; one or more processors; a memory; and a plurality of application programs; and one or more computer programs, where the one or more computer programs are stored in the memory, the one or more computer programs include instructions, and when the instructions are executed by the electronic device, the electronic device is enabled to perform the following steps: displaying a first application in full screen; receiving a fourth operation for triggering a second application; in response to the fourth operation, displaying the second application in full screen, and displaying the first application on the second application by using a floating window; receiving a fifth operation on the second application; in response to the fifth operation, sending a vertical synchronization signal Vsync signal to the first application at a first frequency, or stopping sending a Vsync signal to the first application; in response to the fifth operation, sending a Vsync signal to the second application at a second frequency, where the first frequency is less than the second frequency; compositing a rendered image in the first application with a rendered image in the second application, to obtain a target image; and displaying the target image.

According to a tenth aspect, an embodiment of this application provides an electronic device, where the electronic device includes: a touchscreen, where the touchscreen includes a touch panel and a display screen; one or more processors; a memory; and a plurality of application programs; and one or more computer programs, where the one or more computer programs are stored in the memory, the one or more computer programs include instructions, and when the instructions are executed by the electronic device, the electronic device is enabled to perform the following steps: receiving a sixth operation of a user returning from a first application to a desktop application; in response to the sixth operation, stopping sending a Vsync signal to the first application, sending a vertical synchronization signal Vsync signal to the first application at a first frequency, or stopping sending a Vsync signal to the first application; in response to the sixth operation, sending a Vsync signal to the second application at a second frequency, where the first frequency is less than the second frequency; compositing a rendered image in the first application with a rendered image in the desktop application, to obtain a target image; and displaying the target image.

According to an eleventh aspect, an embodiment of this application provides an electronic device, including: a processor and a memory, where the processor is configured to invoke a program in the memory, to enable the electronic device to perform the method provided in the first aspect, the second aspect, the third aspect, the fourth aspect, or the fifth aspect.

According to a twelfth aspect, an embodiment of this application provides a computer-readable storage medium, where the computer-readable storage medium stores computer instructions, and when the computer instructions are run on an electronic device, the electronic device is enabled to perform the method provided in the first aspect, the second aspect, the third aspect, the fourth aspect, or the fifth aspect.

According to a thirteenth aspect, an embodiment of this application provides a computer program product, where the computer program product includes a computer program, and when the computer program is run, a computer is enabled to perform the method provided in the first aspect, the second aspect, the third aspect, the fourth aspect, or the fifth aspect.

For beneficial effects of the possible implementations in the sixth aspect to the thirteenth aspect, refer to the beneficial effects brought by the first aspect. Details are not described herein again.

### BRIEF DESCRIPTION OF DRAWINGS

FIG. 1 is a schematic diagram of a structure of a terminal device according to an embodiment of this application;
FIG. 2 is a block diagram of a software structure of a terminal device according to an embodiment of this application;
FIG. 3 is a schematic diagram of module interaction according to an embodiment of this application;
FIG. 4 is a schematic diagram of module interaction according to an embodiment of this application;
FIG. 5 is a schematic diagram of an interface display processing procedure of an electronic device according to an embodiment of this application;
FIG. 6 is a schematic diagram of an interface display processing procedure of an electronic device according to an embodiment of this application;
FIG. 7 is a schematic diagram of an interface display processing procedure of an electronic device according to an embodiment of this application;
FIG. 8 is a schematic diagram of an interface display processing procedure of an electronic device according to an embodiment of this application;
FIG. 9 is a schematic flowchart of an image display method according to an embodiment of this application;
FIG. 10A is a schematic diagram of performing rendering control on a foreground application according to an embodiment of this application;
FIG. 10B is a schematic diagram of an interface display processing procedure of an electronic device according to an embodiment of this application;
FIG. 11A is a schematic diagram of performing rendering control on a foreground application according to an embodiment of this application;
FIG. 11B is a schematic diagram of an interface display processing procedure of an electronic device according to an embodiment of this application;
FIG. 12 is a schematic diagram of a first scenario to which an image display method is applicable according to an embodiment of this application;
FIG. 13A to FIG. 13C are schematic diagrams of a second scenario to which an image display method is applicable according to an embodiment of this application;
FIG. 14 is a schematic diagram of a third scenario to which an image display method is applicable according to an embodiment of this application;
FIG. 15 is a schematic diagram of a fourth scenario to which an image display method is applicable according to an embodiment of this application;
FIG. 16 is a schematic flowchart of an image display method according to an embodiment of this application;
FIG. 17 is a schematic diagram of a structure of an image display apparatus according to an embodiment of this application; and
FIG. 18 is a schematic diagram of a hardware structure of an image display apparatus according to an embodiment of this application.

### DESCRIPTION OF EMBODIMENTS

For ease of clearly describing technical solutions of embodiments of this application, some terms and technologies used in embodiments of this application are briefly introduced below:
(1) System application: an application program developed by a manufacturer of a type of electronic device to resolve various practical problems and improve user experience. For example, the system application may be a system desktop or a system gallery.
(2) Third party application: Except an application program developed by a manufacturer of an electronic device, there is an application program developed by an individual or a company for an electronic device, and the application program is referred to as a third party application. For example, the third party application may be WeChat or Toutiao.
(3) Frame: a smallest unit of a single picture in an interface display. A frame may be understood as a still picture, and displaying a plurality of consecutive frames in rapid succession may form a false phenomenon of motion of an object.
(4) Frame rate: a quantity of images that can be generated within one second, where the frame rate is in frames per second (frames per second, fps).
(5) Refresh rate: refers to a quantity of frames of a picture refreshed within one second, or may be understood as a quantity of times of refreshing a picture per second by a graphics processor in an electronic device. A high frame rate may result in a smoother and more realistic animation. A larger quantity of frames per second leads to smoother motion displayed. A unit is hertz (hertz, Hz).
   It should be noted that a frame usually needs to go through processes such as drawing, rendering, and composition before being displayed by an interface.
(6) Frame drawing: picture drawing on a display interface. The display interface may include one or more views. Each view may be drawn by a visual control of a view system. Each view includes sub-views. One sub-view corresponds to one component in the view. For example, one of the sub-views corresponds to one symbol in a picture view.
(7) Frame rendering: coloring a drawn view, adding a 3D effect, or the like. For example, the 3D effect may be a light effect, a shadow effect, a texture effect, or the like.
(8) Frame composition: a process of compositing a plurality of one or more rendered views into the display interface.
(9) Other terms

In embodiments of this application, words such as "first" and "second" are used to distinguish between same or similar items with a basically same function and role. For example, a first chip and a second chip are merely used to distinguish between different chips, and are not intended to limit a sequence thereof. A person skilled in the art may understand that the words such as "first" and "second" do not limit a quantity or an execution sequence, and the words such as "first" and "second" do not indicate a definite difference.

It should be noted that, in embodiments of this application, words such as "exemplary" or "for example" are used to indicate an example, an instance, or descriptions. Any embodiment or design solution described as an "example" or "for example" in this application should not be construed as being more preferred or more advantageous than another embodiment or design solution. To be precise, use of the term such as "exemplary" or "for example" is intended to specifically present a related concept.

In embodiments of this application, "at least one" means one or more, and "a plurality of" means two or more. A term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of the items, including a singular item (piece) or any combination of a plurality of items (pieces). For example, at least one of a, b, or c may represent: a, b, c, a-b, a-c, b-c, or a-b-c, where a, b, and c may be single or plural.

The development of technologies is accompanied with more diversified display functions of electronic devices. For example, more electronic devices support a plurality of foreground applications whose scenario includes application switching, a floating window display, a split-screen display, or the like. In addition, application developers may also obtain more application characteristics through iteration, for example, a picture-in-picture characteristic of a video application.

When an electronic device has a plurality of applications in a foreground, a plurality of rendering tasks work in parallel, posing a great challenge to hardware such as a central processing unit (central processing unit, CPU) and a graphics processing unit (graphics processing unit, GPU). Because resources are limited, when each foreground application works according to an established rendering pipeline, contention for resources occur frequently. The foreground application may be incapable of completing rendering and/or composition within a Vsync cycle as expected, leading to freezing of an application interface, and affecting user experience.

In view of this, in an image display method provided in embodiments of this application, when there are a plurality of foreground applications, the electronic device performs rendering control based on a rendering priority of each of the foreground applications, thereby decreasing overall load of a system, and improving smoothness of the application interface, so that user experience is improved.

The image display method provided in embodiments of this application may be applied to the electronic device supporting the plurality of foreground applications.

The electronic device includes terminal devices, and the terminal device may alternatively be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer having a wireless transmission and receiving function, a virtual reality (Virtual Reality, VR) terminal device, an augmented reality (augmented reality, AR) terminal device, a wireless terminal related to industrial control (industrial control), a wireless terminal related to self-driving (self-driving), a wireless terminal related to remote medical surgery (remote medical surgery), a wireless terminal related to a smart grid (smart grid), a wireless terminal related to transportation safety (transportation safety), a wireless terminal related to a smart city (smart city), a wireless terminal related to a smart home (smart home), or the like. No limitation is imposed on a specific technology and a specific device form used by the electronic device in embodiments of this application. To help better understand embodiments of this application, the following describes a structure of the electronic device in embodiments of this application.

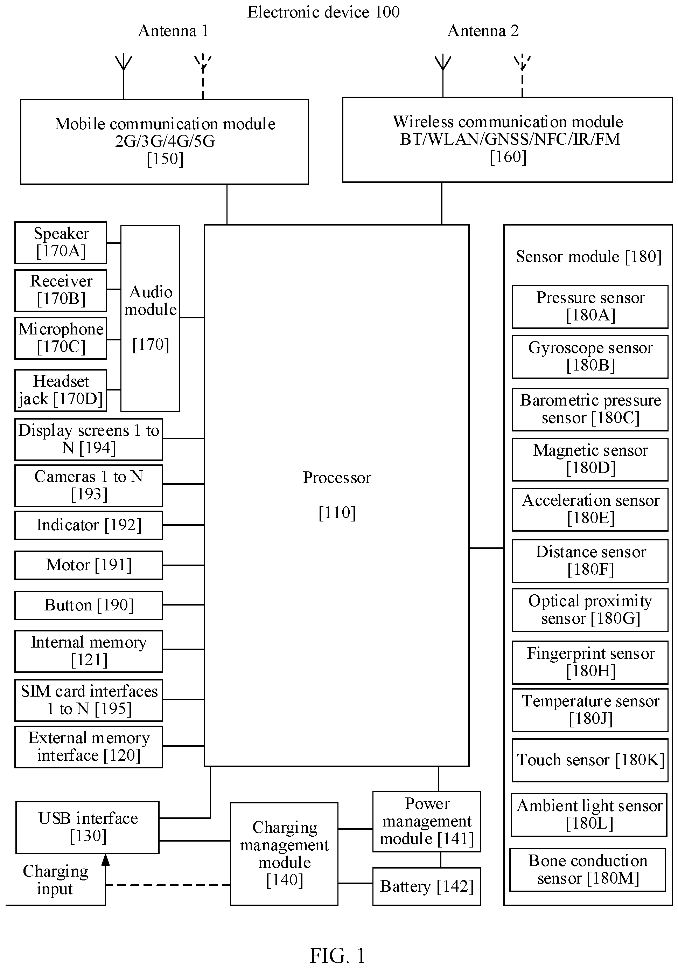

FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, a motor 191, an indicator 192, a camera 193, a display screen 194, and a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, a proximity light sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application constitutes no specific limitation on the electronic device 100. In some other embodiments of this application, the electronic device 100 may include more or fewer components than those shown in the figure, or some components may be combined, or some components may be split, or a different component layout may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural network processing unit (neural-network processing unit, NPU), and/or the like. Different processing units may be independent devices, or may be integrated into one or more processors.

The controller may generate an operation control signal based on instruction operation code and a time sequence signal, to control instruction reading and instruction execution.

A memory may be further disposed in the processor 110, and is configured to store instructions and data. In some embodiments, the memory in the processor 110 is a cache. The memory may store instructions or data recently used or cyclically used by the processor 110. If the processor 110 needs to use the instructions or the data again, the processor 110 may invoke the instructions or the data from the memory. This avoids repeated access, and reduces a waiting time of the processor 110, thereby increasing system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in embodiments of this application is an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. In addition to charging the battery 142, the charging management module 140 may further supply power to the electronic device 100 by using the power management module 141.

A wireless communication function of the electronic device 100 may be implemented by using the antenna 1, the antenna 2, the mobile communication module 150, the wireless communication module 160, the modem processor, the baseband processor, and the like.

The electronic device 100 implements a display function by using a graphics processing unit (graphics processing unit GPU), the display screen 194, the application processor, and the like. The GPU is a microprocessor for image processing and connects the display screen 194 and the application processor. The GPU is configured to: perform mathematical and geometric calculation, and render graphics. The processor 110 may include one or more GPUs, and the one or more GPUs execute program instructions to generate or change displayed information.

The display screen 194 is configured to display an image, display a video, receive a sliding operation, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a miniled, a microLed, a micro-oLed, a quantum dot light emitting diode (quantum dot light emitting diode, QLED), or the like. In some embodiments, the electronic device 100 may include 1 or N display screens 194, where N is a positive integer greater than 1.

The digital signal processor is configured to process a digital signal, and may further process another digital signal in addition to a digital image signal. For example, when the electronic device 100 selects a frequency, the digital signal processor is configured to perform Fourier transform or the like on frequency energy.

The external memory interface 120 may be configured to connect to an external memory card, for example, a micro SD card, to extend a storage capability of the electronic device 100. The external memory card communicates with the processor 110 through the external memory interface 120, to implement a data storage function. For example, a file such as music or a video is stored in the external storage card.

The internal storage 121 may be configured to store computer-executable program code, and the executable program code includes instructions. The internal memory 121 may include a program storage area and a data storage area. The program storage area may store an operating system, an application program required by at least one function (such as a voice playing function and an image playing function), and the like. The data storage area may store data (such as audio data or a phone book) created in a process of using the electronic device 100, and the like. In addition, the internal memory 121 may include a high-speed random access memory, and may further include a non-volatile memory, such as at least one disk storage device, a flash memory device, or a universal flash storage (universal flash storage, UFS). The processor 110 runs the instructions stored in the internal memory 121, and/or the instructions stored in the memory disposed in the processor, to perform various function applications and data processing of the electronic device 100.

The electronic device 100 may implement an audio function by using the audio module 170, the speaker 170A, the telephone receiver 170B, the microphone 170C, the headset jack 170D, such as playing music or recording.

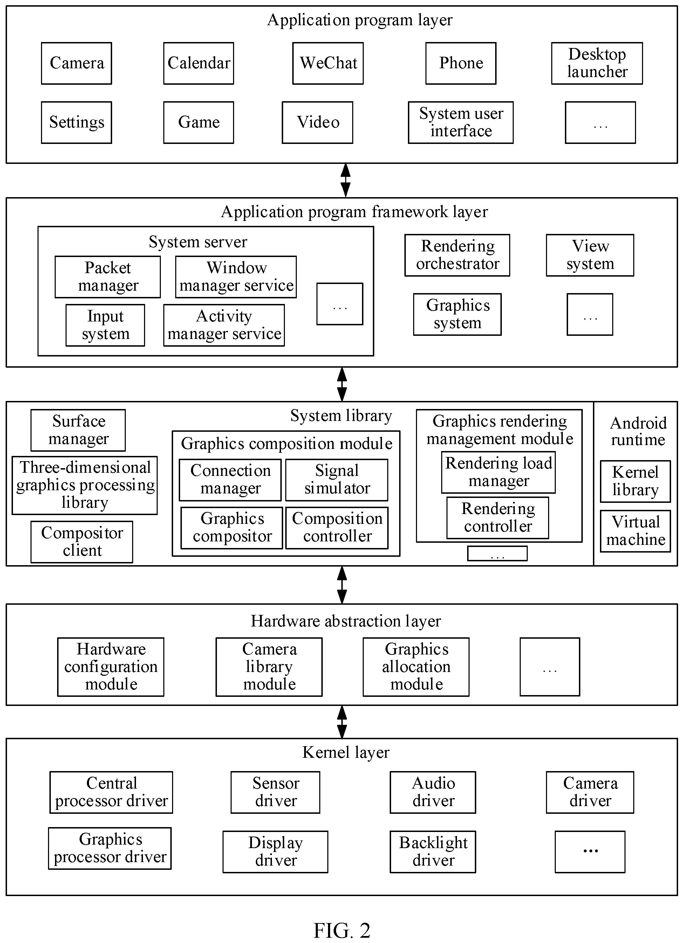

A software system of the electronic device 100 may use a layered architecture, an event-driven architecture, a microkernel architecture, a microservice architecture, a cloud architecture, or the like. In this embodiment of this application, the software structure of the electronic device 100 is an example described by using an Android system with a layered architecture as an example. FIG. 2 is a block diagram of a software structure of an electronic device according to an embodiment of this application. In a layered architecture, software is divided into several layers, and each layer has a clear role and task. The layers communicate with each other through a software interface. In some embodiments, the Android system is divided into five layers that are respectively an application layer, an application program framework layer, an Android runtime (Android runtime) and a system library, and a kernel layer from top to bottom.

The application layer may include a series of application program packages. As shown in FIG. 2, the application program package may include an application program such as a desktop launcher, a system user interface SystemUI, phone, camera, calendar, or WeChat.

The application program framework layer provides an application programming interface (application programming interface, API) and a programming framework for the application program at the application layer. The application program framework layer includes some predefined functions.

As shown in FIG. 2, the application program framework layer may include a system server, a rendering orchestrator, a graphics system, a view system, or the like, and the system server may include a window manager service, a package manager, an activity manager service, an input system, or the like.

The graphics system is configured to manage graphics data of various application programs, including a frame buffer, a graphics drawing pipeline, or the like.

The window manager service (window manager service, WMS) is configured to manage a window program. The window manager service may obtain a size of a display screen, determine whether there is a status bar, perform screen locking, take a screenshot of the screen, and the like.

The package manager is configured to perform program management in a system, such as application program installation, uninstallation, and upgrade.

The activity manager service (activity manager service, AMS) is a core service of Android, and is mainly responsible for startup, switching, and scheduling of a plurality of important components in the system, management and scheduling of an application process, and tracking and managing switching of a foreground application.

The input system is configured to process an input event, for example, receiving a touch operation of a user.

The rendering orchestrator is configured to provide a unified logic update and callback processing mechanism for an application program, and is responsible for requesting and receiving an APP-Vsync signal, to provide a stable operating mechanism for the application program.

The view system includes visual controls, such as a control for displaying a text and a control for displaying an image. The view system may be configured to construct an application program. A display interface may include one or more views. For example, a display interface including a short message service message notification icon may include a view for displaying a text and a view for displaying an image.

The Android runtime includes a kernel library and a virtual machine. The Android runtime is responsible for scheduling and managing an Android system.

The kernel library includes two parts: One part is a functional function that needs to be invoked by a Java language, and the other part is a kernel library of Android.

The application layer and the application program framework layer run on the virtual machine. The virtual machine executes java files of the application layer and the application program framework layer as binary files. The virtual machine is configured to perform functions, such as object life cycle management, stack management, thread management, security and exception management, and garbage collection.

The system library may include a plurality of functional modules, such as a surface manager (surface manager), a three-dimensional graphics processing library (for example, OpenGL ES), a graphics composition module, a compositor client, and a graphics rendering management module.

The surface manager is configured to: manage a display subsystem and provide fusion of 2D and 3D layers for a plurality of application programs.

The three-dimensional graphics processing library is configured to implement three-dimensional graphics drawing, image rendering and composition, layer processing, and the like.

The graphics composition module includes a connection manager, a signal simulator, a graphics compositor, a composition controller, and the like.

The connection manager is configured to: when an application program is started, establish a connection between the application program and the graphics composition module, receive layer information related to the application program, and send a Vsync signal to the application program.

A signal simulator is configured to modulate a software Vsync signal based on a hardware Vsync signal.

A graphics compositor is configured to composite one or more rendered views into a display interface, for example, during a multi-window display, composite rendered images of a plurality of windows.

The compositor client is configured to package an external functional interface of the graphics compositor, including layer creation, destruction, reorchestration, event delivery, rendering control, and the like.

The graphics rendering management module is responsible for recording and managing a rendering status of the application program in the system and for performing rendering control on each application program based on a rendering control policy.

The hardware abstraction layer may include a plurality of library modules, and the library modules may be, for example, a hardware composer (hwcomposer, HWC), a camera library module, and the like. The Android system may load a corresponding library module for device hardware, to implement a purpose of accessing the device hardware by the application program framework layer.

The kernel layer is a layer between hardware and software. The kernel layer is used to drive the hardware to work. The kernel layer includes at least a central processor driver, a sensor driver, a display driver, an audio driver, a camera driver, a backlight driver, a graphics processor driver, and the like.

The hardware may be an audio device, a Bluetooth device, an LCD screen, a camera, and the like.

A display procedure of the electronic device 100 is described below.

An interface display in the WeChat application is used as an example. The WeChat application invokes, by using the view system at the application program framework layer, an image drawing module in the system library to draw an image, and invokes an image rendering module to render a drawn image. The WeChat application sends a rendered image to the graphics composition module. The graphics composition module invokes an image composition module in the system library to composite the rendered image. The graphics composition module sends a composited image to the HWC at the hardware abstraction layer. The HWC sends the composited image to an LCD/LED driver at the kernel layer. The LCD/LED driver drives a screen to be refreshed to display the image.

It should be noted that, to ensure display smoothness and avoid a phenomenon of display freezing, the electronic device generally performs a display based on a Vsync signal, to synchronize procedures such as image drawing, rendering, composition, and screen refreshing and display.

It may be understood that the Vsync signal is a periodic signal, and a Vsync cycle may be set based on a refresh frame rate of the screen. For example, when the refresh frame rate of the screen is 60 Hz, the Vsync cycle may be 16.6 ms, that is, the electronic device generates a control signal every 16.6 ms to trigger the Vsync cycle.

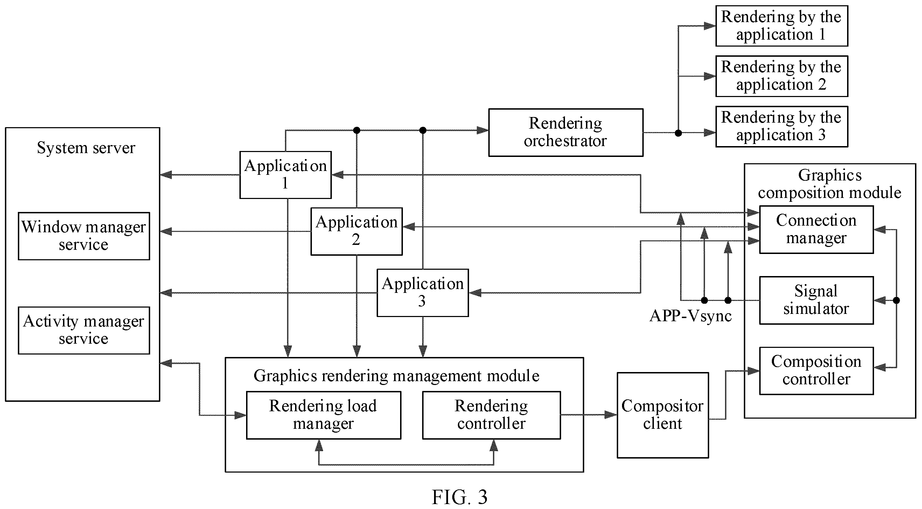

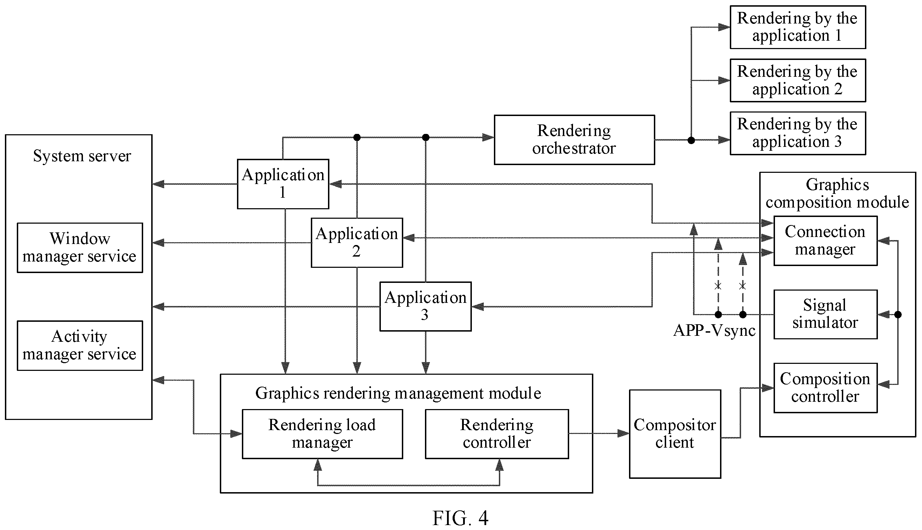

For example, the modules in the image display method provided in this embodiment of this application may include the application program, the graphics composition module, the graphics rendering management module, the system server, and the rendering orchestrator. FIG. 3 and FIG. 4 are interaction diagrams of the modules. As shown in FIG. 3 and FIG. 4, the system server may include the window manager service and the activity manager service, the graphics rendering management module may include a rendering load manager and a rendering controller, and the graphics composition module may include the connection manager, the signal simulator, and the composition controller.

An application receives and responds to a preset operation, and establishes, by using the connection manager and the graphics composition module, a channel for transmitting a Vsync signal. The preset operation is used to indicate to open an application or to switch an application.

The system server performs listening to obtain a change in a foreground application, records window information of the foreground application in the window manager service, records activity information of the foreground application in the activity manager service, and sends the window information of the foreground application and the activity information of the foreground application the rendering load manager. The change in the foreground application includes adding the foreground application, switching the foreground application, or the like.

The foreground application creates a rendering thread, sends rendering attribute information to the rendering load manager, and registers a rendering callback function to the rendering orchestrator. The rendering attribute information includes an initial rendering priority and other information.

The rendering controller obtains the window information of the foreground application and the activity information of the foreground application from the rendering load manager, and determines a quantity of foreground applications based on the window information of the foreground application and the activity information of the foreground application.

It should be noted that, there is a communication connection between the rendering load manager and the rendering controller.

When the quantity of foreground applications is greater than 1, the rendering controller obtains an initial rendering priority from the rendering load manager, determines a rendering priority of each of the foreground applications based on the window information of the foreground application, the activity information of the foreground application, and the initial rendering priority, to obtain a rendering control policy of the plurality of foreground applications, and sends the rendering control policy to the composition controller.

The signal simulator obtains the rendering control policy from the composition controller, and sends a corresponding Vsync signal to the plurality of foreground applications based on the rendering control policy and the established channel for transmitting a Vsync signal. The Vsync signal may be a software Vsync signal (for example, APP-Vsync), and the software Vsync signal is a Vsync signal modulated by the signal simulator based on a hardware Vsync signal.

It may be understood that when the electronic device is an LCD/LED screen, the hardware Vsync signal is an HW-Vsync signal generated by the LCD/LED driver, and the LCD/LED driver sends the HW-Vsync signal to the graphics composition module by using the HWC, and the signal simulator in the graphics composition module obtains the software Vsync signal through modulation based on the hardware Vsync signal.

It should be noted that, there is a communication connection between the connection manager, the signal simulator, and the composition controller.

The plurality of foreground applications invoke the rendering callback function in the rendering orchestrator based on the corresponding Vsync signal, to perform a rendering operation.

For example, when there are three foreground applications (such as an application 1, an application 2, and an application 3), and rendering priorities of the application 1, the application 2, and the application 3 are the same, refer to a rendering control method in FIG. 3. The rendering control method may be as follows: An APP-Vsync signal is normally sent to each of the foreground applications, and after receiving the APP-Vsync signal, each of the application 1, the application 2, and the application 3 may perform rendering based on the APP-Vsync signal.

For another example, when rendering priorities of an application 1, an application 2, and an application 3 are different, and the rendering priority of the application 1 is higher than the rendering priorities of the application 2 and the application 3, an interaction diagram of modules is shown in FIG. 4. The rendering control method may be as follows: An APP-Vsync signal is normally sent to the application 1, and sending an APP-Vsync signal to the application 2 and the application 3 is stopped. Specifically, after receiving the APP-Vsync signal, the application 1 may perform rendering based on the APP-Vsync signal; and however, the application 2 and the application 3 no longer refresh a display interface after receiving the APP-Vsync signal.

The following describes generation and synchronization procedures of a Vsync signal in a possible implementation.

It should be noted that, Vsync signals in the electronic device may be classified into a software Vsync signal and a hardware Vsync signal. The software Vsync signal includes an APP-Vsync signal and an SF-Vsync signal. The APP-Vsync signal is used to trigger a drawing and rendering procedure, and the SF-Vsync signal is used to trigger a composition procedure. The hardware Vsync signal (an HW-Vsync signal) is used to trigger a screen display refreshing procedure.

Normally, the software Vsync signal and the hardware Vsync signal are synchronous in cycle. A change between 60 Hz and 120 Hz is used as an example. If the HW-Vsync signal switches from 60 Hz to 120 Hz, the APP-Vsync signal and the SF-Vsync signal change synchronously from 60 Hz to 120 Hz.

For example, the application sends a Vsync request to the graphics composition module, the graphics composition module sends an HW-Vsync request to the HWC, the HWC sends the HW-Vsync request to the LCD/LED driver, the LCD/LED driver generates an HW-Vsync signal, and feeds back the HW-Vsync signal to the HWC, the HWC feeds back the HW-Vsync signal to the graphics composition module, and the graphics composition module sends the HW-Vsync signal to the application.

The application draws and renders an image based on the received HW-Vsync signal. The graphics composition module performs image composition based on the HW-Vsync signal. The HWC controls, based on the HW-Vsync signal by using the LCD/LED driver at the kernel layer, an LCD/LED screen to perform refreshing to display the image.

Because the LCD/LED driver generates the HW-Vsync signal and feeds back the HW-Vsync signal to the HWC, the electronic device consumes a large quantity of power. To reduce power consumption, the graphics composition module may generate the software Vsync signal to control procedures such as image drawing, rendering, and composition.

Specifically, after receiving the HW-Vsync signal fed back by the HWC, the graphics composition module collects a timestamp of the HW-Vsync signal. When the graphics composition module receives the HW-Vsync signal a plurality of times in succession, the graphics composition module generates a software Vsync signal based on a recorded cycle of the HW-Vsync signal, and sends the software Vsync signal to the application, to synchronize the procedures such as image drawing, rendering, and composition.

For ease of understanding, an example of a display procedure of the electronic device is provided for reference.

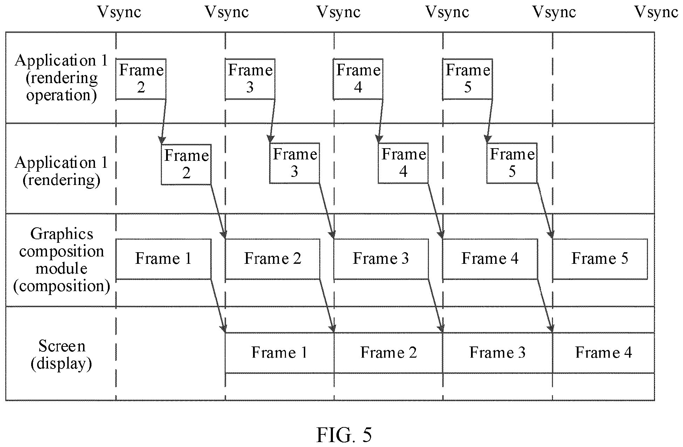

FIG. 5 is a schematic diagram of an interface display processing procedure of an electronic device in a possible implementation. For example, in chronological order, content displayed by the electronic device corresponds to a frame 1, a frame 2, a frame 3, a frame 4, and a frame 5 in sequence.

It may be understood that, when a screen refresh rate is 120 Hz, a Vsync cycle is 8.3 ms; when a screen refresh rate is 60 Hz, a Vsync cycle is 16.6 ms; and the like. Specific values of the screen refresh rate and the Vsync cycle are not specifically limited in this embodiment of this application.

Specifically, when the application 1 performs rendering, the frame 2 is used as an example, and an application on the electronic device renders the frame 2 by using a view system at an application program framework layer. After the frame 2 is rendered, the application on the electronic device sends the rendered frame 2 to a graphics composition module (for example, surface flinger). The graphics composition module composites the rendered frame 2. After the frame 1 is composited, the electronic device may start a display driver by invoking a kernel layer, to display content corresponding to the frame 2 on a screen. The frame 3 and the frame 4 are also composited and displayed in procedures similar to those of the frame 2. Details are not described herein again.

As shown in FIG. 5, in five Vsync cycles, an interface of the application 1 is displayed as the frame 1, the frame 2, the frame 3, and the frame 4 in sequence, and the interface changes continuously and smoothly with no freezing.

It should be noted that, duration for which the application draws and renders an image and duration for compositing the image are related to a status of the electronic device, for example, system load. When each step in a rendering pipeline, including operations such as drawing, rendering, and composition, may be completed within a fixed Vsync cycle, a display interface of the electronic device changes smoothly. When the system load is relatively heavy (for example, two applications simultaneously perform rendering), the duration for which the application draws and renders an image and the duration for compositing the image increase. Consequently, a frame of image may not be displayed in time, and a frame loss occurs, causing display freezing of the electronic device and worsening user experience.

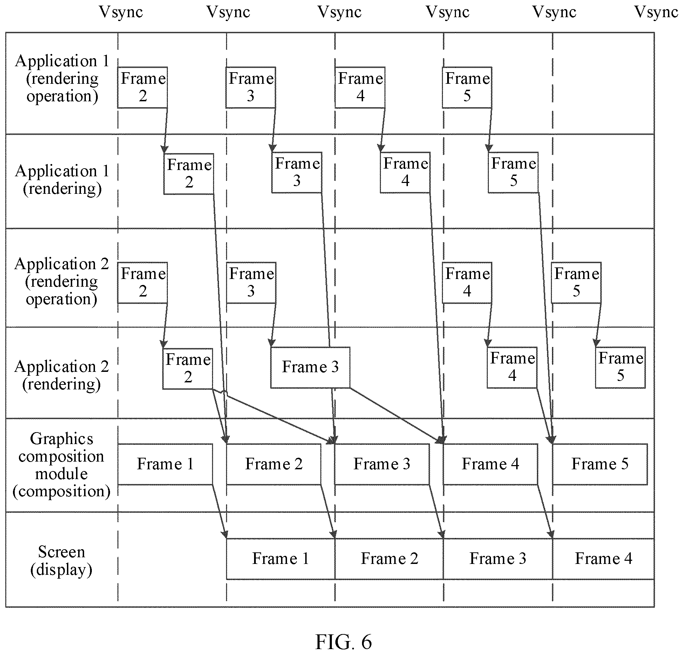

For example, when the application 1 and an application 2 simultaneously perform rendering, a timeout of the rendering by the application 2 is used as an example, and FIG. 6 is a schematic diagram of an interface display processing procedure of an electronic device in a possible implementation. The electronic device separately renders, composites, and displays a frame 2, a frame 3, and a frame 4 in FIG. 6. For details, refer to the corresponding descriptions in FIG. 5.

Different from FIG. 5, the application 1 and the application 2 simultaneously run in a foreground. Due to insufficient supplied resources and other reasons, rendering of a frame 3 of the application 2 consumes more time and the rendering cannot be completed within a Vsync cycle. During composition of the frame 3, a frame 3 of the application 1 may normally participate in the composition. Due to a rendering timeout, the frame 3 of the application 2 cannot normally participate in the composition of the frame 3. Therefore, during the composition of the frame 3, a frame 2 of the application 2 participates in the composition of the frame 3, thereby causing the electronic device to display an interface of the application 1 as a frame 1, a frame 2, the frame 3, and a frame 4 in sequence, and an interface of the application 2 as a frame 1, a frame 2, a frame 2, and the frame 3 in sequence. Display duration of the frame 2 of the application 2 increases, causing display freezing of the application 2 and worsening user experience.

It should be noted that, a rendering thread of an application includes a rendering operation in a CPU and rendering in a GPU. The rendering operation is performed to process some events, and specifically includes: In response to the event, a DoFrame function is invoked to lay out an interface of the application, various attribute information of the interface is sent to the GPU by using a rendering instruction, and the GPU performs a specific rendering operation based on the rendering instruction.

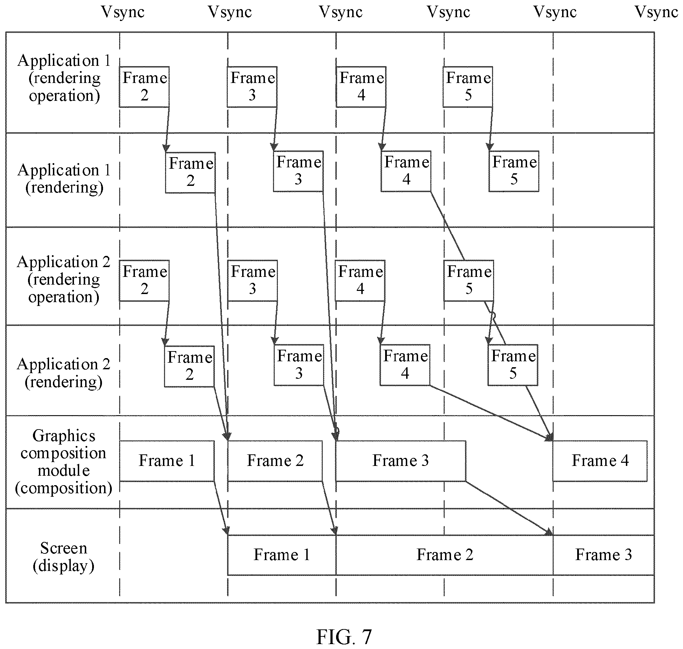

For example, when the application 1 and the application 2 simultaneously perform rendering, a composition timeout is used as an example, and FIG. 7 is a schematic diagram of an interface display processing procedure of an electronic device in a possible implementation. The electronic device separately renders, composites, and displays a frame 2, a frame 3, and a frame 4 in FIG. 7. For details, refer to the corresponding descriptions in FIG. 5.

Different from FIG. 5, the application 1 and the application 2 simultaneously run in a foreground. Due to insufficient supplied resources and other reasons, composition of a frame 3 consumes more time and the composition cannot be completed within a Vsync cycle, thereby causing the electronic device to display an interface of the application 1 as a frame 1, a frame 2, a frame 2, and a frame 3 in sequence, and an interface of the application 2 as a frame 1, a frame 2, a frame 2, and the frame 3 in sequence. Both display duration of the frame 2 of the application 1 and display duration of the frame 2 of the application 2 increase, causing display freezing of the application 1 and the application 2 and worsening user experience.

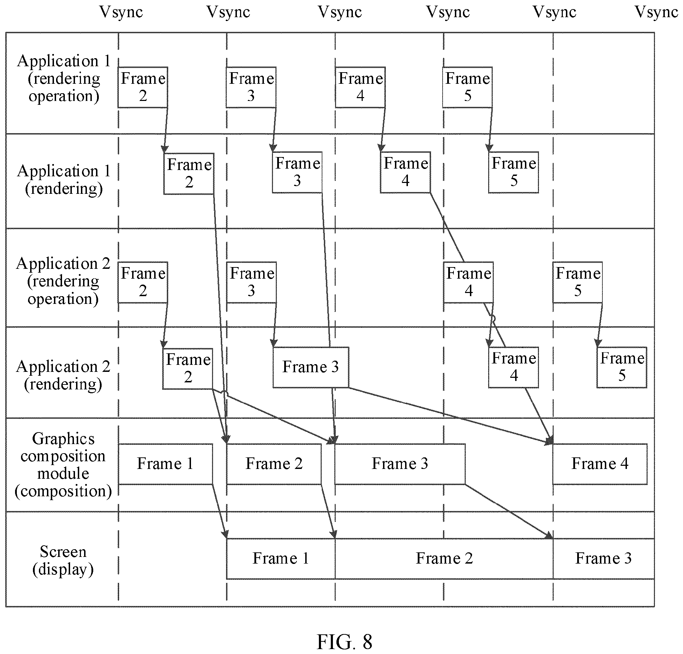

For example, both a rendering timeout and a composition timeout are used as an example, and FIG. 8 is a schematic diagram of an interface display processing procedure of an electronic device in a possible implementation. In chronological order, content displayed by the electronic device corresponds to a frame 1, a frame 2, a frame 3, a frame 4, and a frame 5 in sequence. The electronic device separately renders, composites, and displays a frame 2, a frame 3, and a frame 4 in FIG. 8. For details, refer to the corresponding descriptions in FIG. 5.

Different from FIG. 5, an application 1 and an application 2 simultaneously run in a foreground. Due to insufficient supplied resources and other reasons, rendering of a frame 3 of the application 2 consumes more time, and due to insufficient supplied resources and other reasons, composition of the frame 3 consumes more time. Neither the rendering nor the composition can be completed within a Vsync cycle. Therefore, the electronic device is caused to display an interface of the application 1 as a frame 1, a frame 2, a frame 2, and the frame 3 in sequence, and an interface of the application 2 as a frame 1, a frame 2, a frame 2, and a frame 2 in sequence. Both display duration of the frame 2 of the application 1 and display duration of the frame 2 of the application 2 increase, causing display freezing of the application 1 and the application 2 and worsening user experience.

As can be seen from FIG. 5 to FIG. 8, when a plurality of applications simultaneously perform rendering, relatively heavy rendering load may occur, and the application may be incapable of completing the rendering and/or composition within the Vsync cycle as expected, leading to freezing of an application interface, and affecting user experience.

The image display method in embodiments of this application is described below in detail with reference to specific embodiments. The following embodiments may be combined with each other or separately implemented, and same or similar concepts or processes may not be described repeatedly in some embodiments.

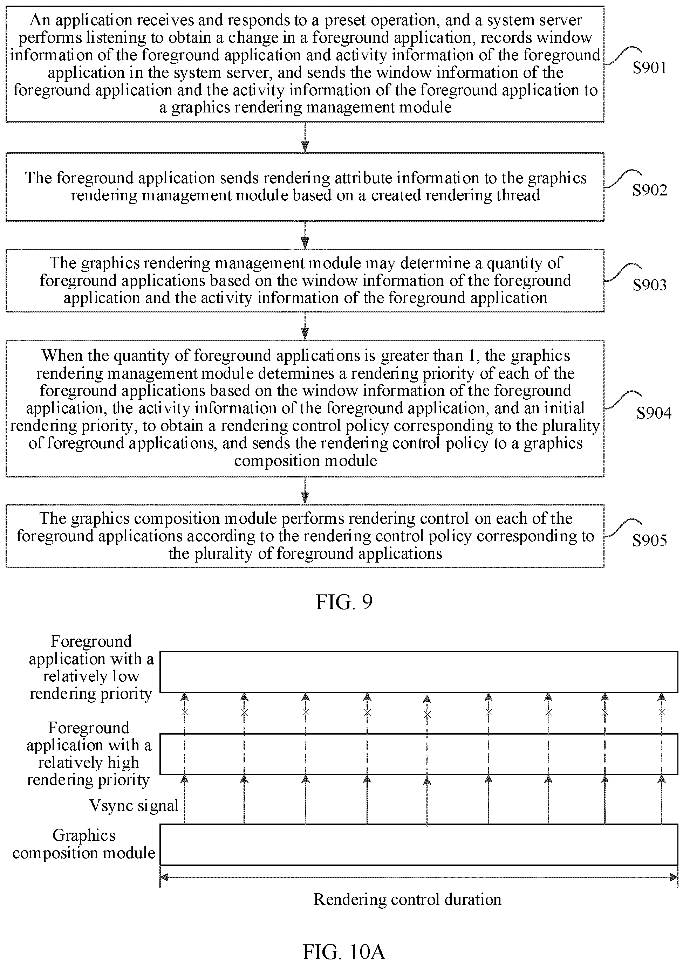

FIG. 9 is a schematic flowchart of an image display method according to an embodiment of this application. The method shown in FIG. 9 may be executed by the electronic device 100 shown in FIG. 1. As shown in FIG. 9, the method includes the following steps.

S901: An application receives and responds to a preset operation. A system server performs listening to obtain a change in a foreground application, records window information of the foreground application and activity information of the foreground application in the system server, and sends the window information of the foreground application and the activity information of the foreground application to a graphics rendering management module.

The preset operation is used to indicate to open an application or to switch an application.

In this embodiment of this application, the foreground application may be understood as a running application visible on a desktop taskbar of a terminal device, for example, a running game application.

In this embodiment of this application, the window information may be understood as that each application has a corresponding window interface during running, and each window interface has respective corresponding information and data. The information and data may include attribute information such as a window size, a window position, and a window layout. For example, WeChat has a corresponding WeChat window interface during running, and WeChat window information may include information such as a position of each button and a size of a dialog box.

In this embodiment of this application, the activity information may be understood as that when an application of the terminal device is started or a foreground application is switched, information may be generated and stored in an activity manager service, to track and manage the switching of the foreground application. For example, when the foreground application is switched from a social application to a game application, activity information is generated and recorded in the activity manager service.

In this embodiment of this application, the system server includes a window manager service and the activity manager service, and the window information of the foreground application is recorded in the window manager service, and the activity information of the foreground application is recorded in the activity manager service. The graphics rendering management module includes a rendering load manager. The graphics rendering management module records the obtained information in the rendering load manager. After the system server sends the window information of the foreground application and the activity information of the foreground application to the graphics rendering management module, the window information and the activity information are stored in the rendering load manager.

For example, when the application receives the preset operation used to indicate to open the application or to switch the application, the system server performs listening to obtain a change in the foreground application, and generates the window information and the activity information.

For example, a social application and a game application have been prestarted on the electronic device, the social application runs in a foreground, and the game application runs in a background. When a user switches the foreground application on the electronic device from the social application to the game application, the foreground application is switched, and the window information and the activity information are generated.

S902: The foreground application sends rendering attribute information to the graphics rendering management module based on a created rendering thread. The rendering attribute information includes an initial rendering priority and other information.

In this embodiment of this application, after the foreground application sends the rendering attribute information to the graphics rendering management module, the rendering attribute information is also stored in the rendering load manager.

In this embodiment of this application, different applications may have different initial rendering priorities. For example, the initial rendering priorities may be classified into high-medium-low. For example, the initial rendering priorities may be set to 0 to 2 in sequence from high to low, the initial rendering priority corresponds to 0 when the initial rendering priority is high, the initial rendering priority corresponds to 1 when the initial rendering priority is medium, and the initial rendering priority corresponds to 2 when the initial rendering priority is low. Certainly, the initial rendering priorities may alternatively be set to 0 to 2 in sequence from low to high, the initial rendering priority corresponds to 2 when the initial rendering priority is high, the initial rendering priority corresponds to 1 when the initial rendering priority is medium, and the initial rendering priority corresponds to 0 when the initial rendering priority is low. The classification of the initial rendering priorities is not specifically limited in this embodiment of this application.

In a possible implementation, the initial rendering priority may be set based on an application type of the application. Specifically, an initial rendering priority of a system application may be set to be higher than an initial rendering priority of a third party application. For example, the system application may include a desktop launcher, a system user interface, or the like, and the third party application may include WeChat, Toutiao, or the like.

In another possible implementation, the initial rendering priority may be set based on rendering load of the application. Specifically, an initial rendering priority of an application with heavy rendering load may be set to be higher than an initial rendering priority of an application with light rendering load. For example, rendering load of the game application is heavier than rendering load of the social application, and an initial rendering priority of the game application is set to be higher than an initial rendering priority of the social application.

In another possible implementation, the initial rendering priority may be set based on an application type of the application and rendering load of the application. Specifically, when application types of a plurality of applications are the same, the initial rendering priority may be set based on the rendering load of the application, and an initial rendering priority of an application with heavy rendering load may be set to be higher than an initial rendering priority of an application with light rendering load. For example, when two foreground applications are respectively a third party game application and a third party social application, when rendering load of the third party game application is heavier than rendering load of the third party social application, an initial rendering priority of the third party game application is set to be higher than an initial rendering priority of the third party social application.

For example, the foreground application creates a rendering thread before performing rendering and sends the rendering attribute information such as the initial rendering priority in the rendering thread to the rendering load manager.

S903: The graphics rendering management module may determine a quantity of foreground applications based on the window information of the foreground application and the activity information of the foreground application.

For example, the graphics rendering management module may determine, based on the window information of the foreground application and the activity information of the foreground application, whether the foreground application has changed, for example, switching or addition of the foreground application, and learn, based on the window information of the foreground application and the activity information of the foreground application, which applications are in the foreground, thereby determining the quantity of foreground applications.

It may be understood that the quantity of foreground applications may alternatively be determined in any other random manner in this embodiment of this application. This is not specifically limited in this embodiment of this application.

S904: When the quantity of foreground applications is greater than 1, the graphics rendering management module determines a rendering priority of each of the foreground applications based on the window information of the foreground application, the activity information of the foreground application, and the initial rendering priority, to obtain a rendering control policy corresponding to the plurality of foreground applications, and sends the rendering control policy to a graphics composition module.

In this embodiment of this application, the rendering controller determines the rendering priority of each of the foreground applications based on the window information of the foreground application, the activity information of the foreground application, and the initial rendering priority that are stored in the rendering load manager, to obtain the rendering control policy corresponding to the plurality of foreground applications.

In this embodiment of this application, the rendering priority may be used to perform different degrees of rendering control on the plurality of foreground applications. For example, when the plurality of foreground applications perform rendering, a higher rendering priority of the foreground application leads to more computing resources provided, so that smoothness of a foreground application with a high rendering priority can be improved.

For example, rendering priorities may be classified into high-medium-low. For example, the rendering priorities may be set to 0 to 2 in sequence from high to low, the rendering priority corresponds to 0 when the rendering priority is high, the rendering priority corresponds to 1 when the rendering priority is medium, and the rendering priority corresponds to 2 when the rendering priority is low. Certainly, rendering priorities may alternatively be set to 0 to 2 in sequence from low to high, the rendering priority corresponds to 2 when the rendering priority is high, the rendering priority corresponds to 1 when the rendering priority is medium, and the rendering priority corresponds to 0 when the rendering priority is low.

It should be noted that, the classification of the rendering priorities is not specifically limited in this embodiment of this application.

In a possible implementation, that the graphics rendering management module determines, based on the rendering priority of each of the foreground applications, the rendering control policy corresponding to the plurality of foreground applications may include: obtaining, by the rendering controller, the initial rendering priority from the rendering load manager, and determining the rendering priority of each of the foreground applications based on the window information of the foreground application, the activity information of the foreground application, and the initial rendering priority, to obtain the rendering control policy corresponding to the plurality of foreground applications.

For example, the window information further includes a rendering area of the foreground application. When the quantity of foreground applications is greater than 1, it is determined, based on a rendering area of each of the foreground applications, whether to perform rendering control on each of the foreground applications.

Specifically, when the rendering area of each of the foreground applications does not exceed a threshold, rendering control is performed on none of the foreground applications; and when the rendering area of each of the foreground applications exceeds a threshold, rendering control is performed on each of the foreground applications, and the rendering priority of each of the foreground applications is determined based on the window information of the foreground application, the activity information of the foreground application, and the initial rendering priority, to obtain the rendering control policy of the plurality of foreground applications.

It should be noted that, the threshold may be set based on an actual situation or experience, for example, may be set to one-half of a screen area. A specific value of the threshold is not limited herein in this embodiment of this application.

For example, the window information may further include a z-order of a window corresponding to each of the foreground applications, and whether the window corresponding to each of the foreground applications is a focus window. The activity information includes switching information of the foreground application. The rendering controller may obtain the rendering priority of each of the foreground applications based on the z-order of the window corresponding to each of the foreground applications, whether the window corresponding to each of the foreground applications is the focus window, the switching information of the foreground application, and/or the initial rendering priority of the foreground application.

It should be noted that, to ensure smoothness of an application that is switched from a background to a foreground, a low rendering priority is assigned to an application that is to be switched from the foreground to the background (switched out), and a high rendering priority is assigned to an application that is to be switched from the background to the foreground (switched in).

A window z-order may be understood as an order of windows stacked on top of each other along an imaginary straight line perpendicular to a screen. A high rendering priority is assigned to an application with a window z-order close to a top layer, and a low rendering priority is assigned to an application with a window z-order close to a bottom layer.

A high rendering priority is assigned to an application corresponding to a focus window, and a low rendering priority is assigned to an application corresponding to a non-focus window. The focus window may be determined based on an operation of the user. For example, when two foreground applications are displayed in a split-screen manner, the user performs a touch operation on an upper half of a screen. In this case, a foreground application displayed in the upper half of the screen is the focus window, and a foreground application displayed in a lower half of the screen is the non-focus window. When the user performs the touch operation, the window manager service also receives corresponding information, so that the foreground application corresponding to the focus window can be determined based on the window information.

In a possible implementation, initial rendering priorities are set to 0 to 2 in sequence from high to low. Based on an initial rendering priority of each application, for an application to be switched out, a rendering priority is increased by 1, and for an application to be switched in, a rendering priority is decreased by 1. For an application whose window z-order moves forward, a rendering priority is decreased by 1. For an application whose window z-order moves backward, a rendering priority is increased by 1. For an application corresponding to the focus window, a rendering priority is decreased by 1. For an application corresponding to the non-focus window, a rendering priority is increased by 1.

In this embodiment of this application, the rendering control policy may be related to the rendering priority of each application.

For example, the rendering control policy may be determined based on the rendering priority, for example, stopping sending a Vsync signal to a foreground application with a relatively low rendering priority, or reducing a frequency of sending a Vsync signal to a foreground application with a relatively low rendering priority, or first stopping sending a Vsync signal to a foreground application with a relatively low rendering priority, and if it is recognized, based on the window information of the foreground application and the activity information of the foreground application, that load of a plurality of foreground applications is decreased to a first threshold, performing an adjustment to decreasing a frequency of sending a Vsync signal to a foreground application with a relatively low rendering priority.

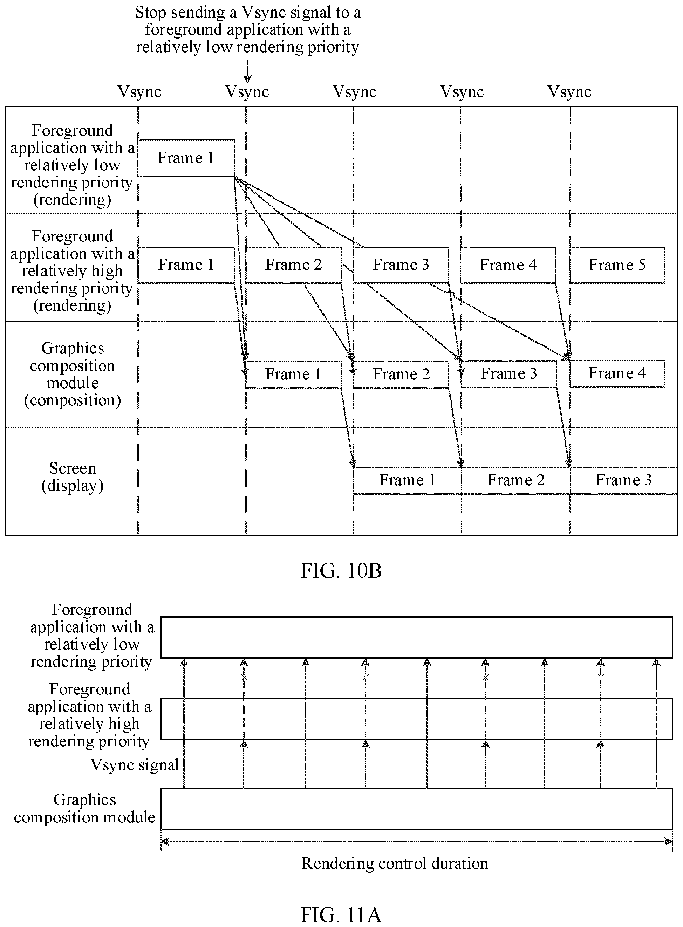

For example, FIG. 10A and FIG. 11A are two diagrams of performing rendering control on a foreground application. FIG. 10A shows stopping sending a Vsync signal to a foreground application with a relatively low rendering priority, and FIG. 11A shows decreasing a frequency of sending a Vsync signal to a foreground application with a relatively low rendering priority.

As shown in FIG. 10A, within rendering control duration, the graphics composition module stops sending the Vsync signal to the foreground application with a relatively low rendering priority, and normally sends a Vsync signal to a foreground application with a relatively high rendering priority based on an original Vsync cycle.

For example, FIG. 10B is a schematic diagram of an interface display processing procedure of an electronic device in a possible implementation. As shown in FIG. 10B, after a foreground application with a relatively low rendering priority renders a frame 1, when a second Vsync signal arrives, a graphics composition module stops sending a Vsync signal to the foreground application with the relatively low rendering priority, and normally sends a Vsync signal to a foreground application with a relatively high rendering priority based on an original Vsync cycle. An interface of the foreground application with the relatively high rendering priority renders the frame 1, a frame 2, a frame 3, a frame 4, and a frame 5 based on the original Vsync cycle.

For example, after sending a Vsync signal to a foreground application with a relatively low rendering priority is stopped, in a composited image, a frame 2, a frame 3, a frame 4, a frame 5, and the like rendered by a foreground application a relatively high rendering priority are composited and displayed in sequence based on the original Vsync cycle, and a last frame 1 rendered by the foreground application with the relatively low rendering priority is composited and displayed based on the original Vsync cycle. A composited image is still displayed sequentially in an order of the frame 1, the frame 2, the frame 3, and the like. During a display, the interface of the foreground application with the relatively high rendering priority is refreshed based on the original Vsync cycle, while an interface of the foreground application with the relatively low rendering priority stays at the last frame of image before rendering control.

As shown in FIG. 11A, within rendering control duration, the graphics composition module decreases a frequency of sending a Vsync signal to a foreground application with a relatively low rendering priority, for example, decreases the frequency of sending a Vsync signal to half of an original frequency of sending a Vsync signal, and normally sends a Vsync signal to a foreground application with a relatively high rendering priority based on an original Vsync cycle.

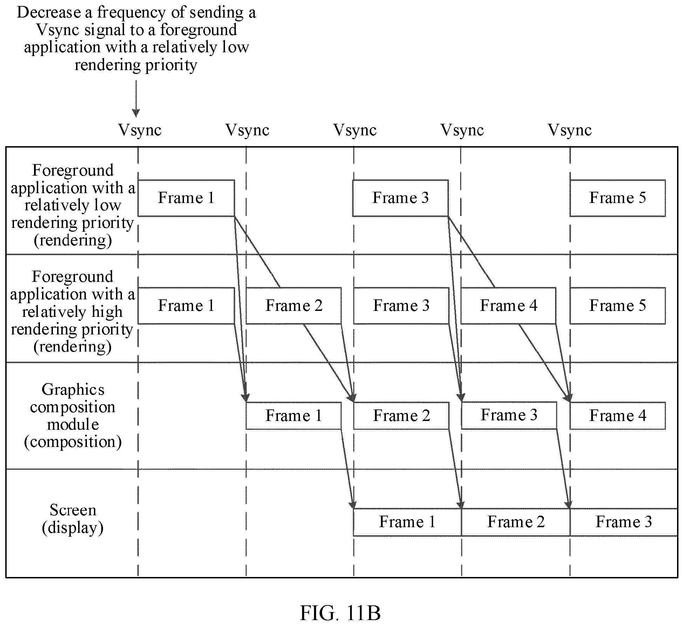

For example, FIG. 11B is a schematic diagram of an interface display processing procedure of an electronic device in a possible implementation. As shown in FIG. 11B, when a first Vsync signal arrives, a graphics composition module decreases a frequency of sending a Vsync signal to a foreground application with a relatively low rendering priority to half of an original frequency of sending a Vsync signal. An interface of the foreground application with the relatively low rendering priority renders frames 1, 3, and 5 based on a decreased Vsync cycle; and normally sends a Vsync signal to a foreground application with a relatively high rendering priority based on an original Vsync cycle. An interface of the foreground application with the relatively high rendering priority renders a frame 1, a frame 2, a frame 3, a frame 4, a frame 5, and the like based on the original Vsync cycle.

For example, after sending a Vsync signal to a foreground application with a relatively low rendering priority is stopped, in a composited image, a frame 2, a frame 3, a frame 4, a frame 5, and the like rendered by a foreground application with a relatively high rendering priority are composited and displayed in sequence based on the original Vsync cycle, and a frame 1, a frame 3, a frame 5, and the like rendered by the foreground application with the relatively low rendering priority are composited and displayed in sequence based on the decreased Vsync cycle. A composited image is still displayed sequentially in an order of the frame 1, the frame 2, the frame 3, and the like. During a display, the interface of the foreground application with the relatively high rendering priority is refreshed based on the original Vsync cycle, while an interface of the foreground application with the relatively low rendering priority has a relatively low rendering frequency and the image is refreshed relatively slowly. When the interface of the foreground application with the relatively high rendering priority is refreshed by two frames, the interface of the foreground application with the relatively low rendering priority can be refreshed only by one frame. A refresh frequency of the interface of the foreground application with the relatively low rendering priority is one-half less than a refresh frequency of the interface of the foreground application with the relatively high rendering priority.

For example, when the quantity of foreground applications is greater than 1, that the graphics rendering management module obtains the rendering priority of each of the foreground applications, to determine the rendering control policy corresponding to the plurality of foreground applications may be specifically: for the foreground application with the relatively low rendering priority, stopping sending the Vsync signal and/or decreasing the frequency of sending the Vsync signal, until load of the foreground application is recognized or the quantity of foreground applications is decreased to a corresponding threshold; and for the foreground application with the relatively high priority, normally sending the Vsync signal based on the original Vsync cycle.

S905: The graphics composition module performs rendering control on each of the foreground applications according to the rendering control policy corresponding to the plurality of foreground applications.

The graphics composition module includes a composition controller, a signal simulator, a connection manager, and the like.

In this embodiment of this application, the graphics composition module stores, in the composition controller, the rendering control policy sent by the rendering controller. The composition controller sends the rendering control policy to the signal simulator. The signal simulator sends the corresponding Vsync signal to each of the foreground applications based on the rendering control policy and the established channel for transmitting a Vsync signal.

The channel for transmitting a Vsync signal is a channel established by the graphics composition module to the foreground application by using the connection manager, so that the Vsync signal generated by the signal simulator can be sent to the foreground application.

In a possible implementation, when a rendering control method is stopping sending the Vsync signal to the foreground application with the relatively low rendering priority, the signal simulator stops, within rendering control duration and based on the established channel for transmitting a Vsync signal, sending the Vsync signal to the foreground application with the relatively low rendering priority, and normally sends the Vsync signal to the foreground application with the relatively high priority based on the original Vsync cycle.

For example, when the foreground applications include an application 1 and an application 2, a rendering priority of the application 1 is higher than a rendering priority of the application 2. In this case, the signal simulator stops sending a Vsync signal to the application 2, and the application 2 stops rendering within rendering control duration. An image of the application 2 stays at a last frame before rendering control, and the Vsync signal is sent to the application 1 based on the original Vsync cycle. The application 1 may normally perform rendering.

In another possible implementation, when the rendering control method is decreasing the frequency of sending the Vsync signal to the foreground application with the relatively low rendering priority, the signal simulator decreases, within the rendering control duration based on the established channel for transmitting a Vsync signal, the frequency of sending the Vsync signal to the foreground application with the relatively low rendering priority (for example, decreases the frequency of sending the Vsync signal to half of or one-third of an original frequency of sending the Vsync signal), and normally sends the Vsync signal to the foreground application with the relatively high priority based on the original Vsync cycle.

For example, when the foreground applications include an application 1 and an application 2, both an original frequency of sending the Vsync signal to the application 1 and an original frequency of sending the Vsync signal to the application 2 are 60 Hz, and a rendering priority of the application 1 is higher than a rendering priority of the application 2. In this case, the original frequency of sending the Vsync signal to the application 2 is decreased to 30 Hz, and the sending frequency of the application 1 is maintained as the sending frequency of 60 Hz. Therefore, within the rendering control duration, when an image of the application 1 is refreshed by two frames, an image of the application 2 can be refreshed by only one frame, and an image refresh frequency of the application 2 is one-half less than an image refresh frequency of the application 1.

It should be noted that, when the rendering control policy is executed, the quantity of foreground applications may be decreased, and/or the load of the foreground application may be decreased. In this case, when the quantity of foreground applications is decreased to 1 or the load of the foreground application is less than a threshold, executing the rendering control policy is stopped. It may be understood that a change in the foreground application is uncertain. Therefore, rendering control duration for executing the rendering control policy may also be uncertain.

For example, when the rendering control policy is executed, the quantity of foreground applications may further be recognized based on the window information of the foreground application and the activity information of the foreground application. When it is recognized that the quantity of foreground applications is decreased to 1, using the rendering control method may be stopped. Alternatively, the load of the plurality of foreground applications is recognized based on the window information of the foreground application and the activity information of the foreground application. When it is recognized that the load of the plurality of foreground applications is decreased to a threshold, using the rendering control method may be stopped.

In the image display method provided in this embodiment of this application, when there are the plurality of foreground applications, the electronic device performs rendering control based on the rendering priority of each of the foreground applications, thereby decreasing overall load of a system, and improving smoothness of an application with a relatively high rendering priority, so that user experience is improved.

For example, the image display method provided in this embodiment of this application may be applied to a multi-window display scenario. A multi-window display may include an interface display, a split-screen display, a floating window display, or the like during switching of the foreground application.

Specifically, when the graphics rendering management module determines, based on the rendering priority of each of the foreground applications, the rendering control policy corresponding to the plurality of foreground applications, descriptions are respectively provided in the three scenarios: switching of the foreground application, the split-screen display, and the floating window display.

It should be noted that, when the rendering area of each of the foreground applications meets a rendering control condition, rendering control on each of the foreground applications is triggered; and when the rendering area of each of the foreground applications does not meet the rendering control condition, each of the foreground applications performs rendering based on an original Vsync signal.

The multi-window display scenario may be a scenario in which the foreground application is switched. For example, the foreground application returns to a desktop from a third party application or another system application, a third party application or another system application is opened, and the foreground application is switched in/out from a third party application or another system application.

For example, when two applications other than a desktop application are switched in/out, a specific process includes: displaying a multitasking interface on a screen of the electronic device, where the multitasking interface includes a first application and a second application; receiving a first operation of a user, where the first operation is used to switch the first application in and the second application out; in response to the first operation, sending a vertical synchronization signal Vsync signal to the first application at a first frequency, or stopping sending a Vsync signal to the first application; in response to the first operation, sending a Vsync signal to the second application at a second frequency, where the first frequency is less than the second frequency; compositing a rendered image in the first application with a rendered image in the second application, to obtain a target image; and displaying the target image.

For example, an example in which a first scenario is switching in/out a video application and a social application is used. FIG. 12 is a schematic diagram of the first scenario to which an image display method is applicable according to an embodiment of this application.

As shown in a in FIG. 12, a multitasking interface is displayed on a screen of an electronic device, where the multitasking interface includes the social application and the video application; an operation of a user clicking the social application is received; and in response to the operation, the social application is switched in, and the video application is switched out, to obtain an interface shown in b in FIG. 12. The social application is displayed on the screen.

For example, based on that the social application is a switched-in application and the video application is a switched-out application, a Vsync signal is sent to the video application at a first frequency, or sending a Vsync signal to the video application is stopped; in response to the operation, a Vsync signal to is sent to the social application at a second frequency, where the first frequency is less than the second frequency; a rendered image in the video application is composited with a rendered image in the social application, to obtain a target image; and the target image is displayed.

In this embodiment of this application, the Vsync signal is sent to the switched-in application at the original frequency; and the frequency of sending the Vsync signal to the switched-out application is decreased, or sending the Vsync signal to the switched-out application is stopped, so that the switched-in application can have sufficient rendering resources, thereby improving smoothness of the switched-in application.

For example, when a foreground application returns to a desktop from a third party application or another system application, a specific process includes: receiving a sixth operation of a user returning from a first application to a desktop application; in response to the sixth operation, stopping sending a Vsync signal to the first application, sending a Vsync signal to the first application at a first frequency, or stopping sending a Vsync signal to the first application; in response to the sixth operation, sending a Vsync signal to the second application at a second frequency, where the first frequency is less than the second frequency; compositing a rendered image in the first application with a rendered image in the desktop application, to obtain a target image; and displaying the target image.

For example, in this scenario, a rendering area of each of foreground applications meets a rendering control condition. FIG. 13A to FIG. 13C are schematic diagrams of a second scenario to which an image display method is applicable according to an embodiment of this application.

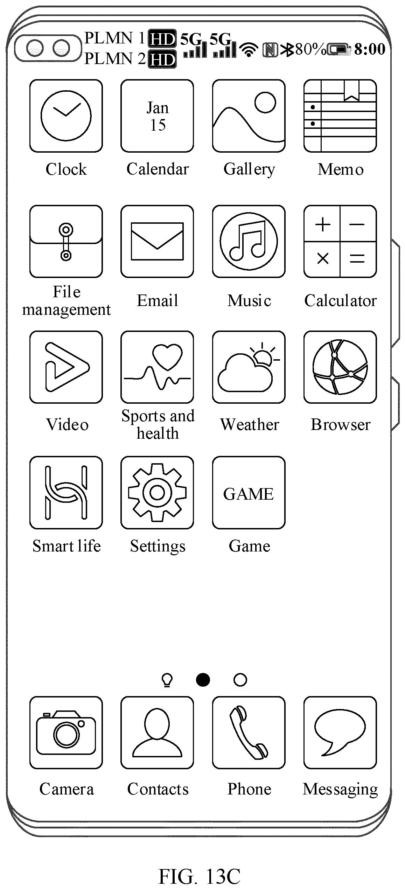

As shown in FIG. 13A and FIG. 13B, through a swiping-up operation by a user, in response to the operation, a display window of a social application gradually decreases until the display window disappears, to obtain a system desktop shown in FIG. 13C, so that a display interface of an electronic device returns from a social interface to a system desktop. It may be understood that the social application may be a third party application or a system application.

For example, based on that the social application is a switched-out application, and Launcher is a switched-in application, a Vsync signal is sent to the social application at a first frequency, or sending a Vsync signal to Launcheris stopped; in response to the operation, a Vsync signal is sent to Launcher at a second frequency, where the first frequency is less than the second frequency; a rendered image in the social application is composited with a rendered image in Launcher, to obtain a target image; and the target image is displayed.

In a process of returning from the social interface to the system desktop, the social application and Launcher simultaneously perform rendering. Consequently, excessively high system load may be caused. The electronic device may perform rendering control on the social application and Launcher based on a rendering priority of the social application and a rendering priority of Launcher.

In such a scenario, because the rendering performed by Launcher is relatively important to user experience, Launcher is located at a top layer in a window z-order. When the foreground application includes Launcher and another application, when the foreground application is switched, the window z-order corresponding to Launcher and a window z-order corresponding to the another application do not change; and when foreground applications are another two applications other than Launcher, when the foreground application is switched, a z-order of a switched-in application is moved forward, a rendering priority is increased, a z-order of a switched-out application is moved backward, and a rendering priority is decreased.

In such a scenario, the rendering priority of the switched-in application is increased, and the rendering priority of the switched-out application is decreased, thereby ensuring smoothness of an application to be displayed in a foreground. In addition, in such a scenario, a window touched by the user may not be a window corresponding to the application to be switched in. Therefore, the rendering priority of the application is not adjusted based on whether the application corresponds to a focus window.

For example, initial rendering priorities set by the electronic device are 0 to 2 from high to low, and an initial rendering priority of the social interface and an initial rendering priority of Launcher are 2 and 1 respectively. In a process of returning from the social interface to the system desktop, the rendering priority of Launcher is decreased by 1 based on the initial rendering priority of Launcher, the rendering priority of Launcher becomes 0, the rendering priority of the social application is increased by 1 based on the initial rendering priority of the social application, and the rendering priority of the social application becomes 3. In addition, a window z-order corresponding to Launcher and a window z-order corresponding to the social application do not change. A corresponding relationship between a foreground application and a rendering priority may be shown in Table 1.

**Table 1 Corresponding relationship between a foreground application and a rendering priority**

| Application | Initial rendering priority | Switched-in/out | Whether a window is a focus window | Change in a z-order | Rendering priority |
|---|---|---|---|---|---|
| Social application | 2 | +1 | 0 | 0 | 3 |
| Launcher | 1 | -1 | 0 | 0 | 0 |

As can be seen from Table 1, the rendering priority of the social application and the rendering priority of Launcher are adjusted, the rendering priority of the social application is 3, and the rendering priority of Launcher is 0. In this case, rendering by the social application may be limited, and rendering by Launcher is ensured, thereby improving smoothness of Launcher. The limiting the rendering by the social application may include stopping sending a Vsync signal to the social application and/or decreasing a frequency of sending a Vsync signal.

In this embodiment of this application, the Vsync signal is sent to a switched-in application at an original frequency, and the frequency of sending the Vsync signal to the switched-out application is reduced, or sending the Vsync signal to the switched-out application is stopped, so that the switched-in application can have sufficient rendering resources, thereby improving smoothness of the switched-in application.

The multi-window display scenario may be a split-screen display scenario. For example, different applications are respectively displayed in an upper half window of a screen and a lower half window of the screen. For example, a PPT file is displayed in the upper half window of the screen, and a word document is displayed in the lower half window of the screen.

For example, a first interface is displayed, where the first interface includes a first application; a second operation performed by a user to display the first application and a second application in a split-screen manner is received; in response to the second operation, the first application is displayed in a first window and the second application is displayed in a second window; a third operation on the second application in the second window is received; in response to the third operation, a vertical synchronization signal Vsync signal is sent to the first application at a first frequency, or sending a Vsync signal to the first application is stopped; in response to the second operation, a Vsync signal is sent to the second application at a second frequency, where the first frequency is less than the second frequency; a rendered image in the first application is composited with a rendered image in the second application, to obtain a target image; and the target image is displayed.

For example, in such a scenario, a rendering area of each of foreground applications meets a rendering control condition. FIG. 14 is a schematic diagram of a third scenario to which an image display method is applicable according to an embodiment of this application.

As shown in FIG. 14, a display interface of an electronic device includes a PPT application and a word application. A PPT file is displayed in an upper half window of a screen, and a word document is displayed in a lower half window of the screen. A user edits the PPT file based on the word document. In this case, the user performs a touch operation on the upper half window of the screen, thereby determining that the upper half window is a focus window.

For example, initial rendering priorities set by the electronic device are 0 to 2 from high to low, and an initial rendering priority of the word application and an initial rendering priority of the PPT application are both 2. Because a window corresponding to the PPT application is a focus window, a rendering priority of the PPT application is decreased by 1 based on the initial rendering priority of the PPT application, and the rendering priority of the PPT application becomes 1. Because a window corresponding to the word application is a non-focus window, a rendering priority of the word application is increased by 1 based on the initial rendering priority of the word application, and the rendering priority of the word application becomes 3. A corresponding relationship between a foreground application and a rendering priority may be shown in Table 2.

**Table 2 Corresponding relationship between a foreground application and a rendering priority**

| Application | Initial rendering priority | Switched-in/out | Whether a window is a focus window | Change in a z-order | Rendering priority |
|---|---|---|---|---|---|
| PPT application | 2 | 0 | -1 | 0 | 1 |
| Word application | 2 | 0 | +1 | 0 | 3 |

As can be seen from Table 2, the rendering priority of the word application and the rendering priority of the PPT application are adjusted, the rendering priority of the word application is 3, and the rendering priority of the PPT application is 1. In this case, rendering by the word application may be limited, and rendering by the PPT application is ensured, thereby improving smoothness of the PPT application. The limiting the rendering by the word application may include stopping sending a Vsync signal to the word application and/or decreasing a frequency of sending a Vsync signal.

In this embodiment of this application, a Vsync signal is sent to an application in a focus window at an original frequency, and a frequency of sending a Vsync signal to an application in a non-focus window is decreased, or sending a Vsync signal to an application in a non-focus window is stopped, so that the application in the focus window can have sufficient rendering resources, thereby improving smoothness of the application in the focus window.

The multi-window display scenario may be a floating window display scenario, for example, a picture-in-picture display of a video application or a display of a window such as a web page or a file on a desktop.

For example, a first application is displayed in full screen; a fourth operation for triggering a second application is received; in response to the fourth operation, the second application is displayed in full screen, and the first application is displayed on the second application by using a floating window; a fifth operation on the second application is received; in response to the fifth operation, a vertical synchronization signal Vsync signal is sent to the first application at a first frequency, or sending a Vsync signal to the first application is stopped; in response to the fifth operation, a Vsync signal is sent to the second application at a second frequency, where the first frequency is less than the second frequency; a rendered image in the first application is composited with a rendered image in the second application, to obtain a target image; and the target image is displayed.

A fourth scenario being the picture-in-picture display of the video application is used as an example. In such a scenario, a rendering area of each of foreground applications meets a rendering control condition. FIG. 15 is a schematic diagram of the fourth scenario to which an image display method is applicable according to an embodiment of this application.

As shown in a in FIG. 15, when a user watches a video in full screen by using video software, a social application (for example, WeChat) pops up a message notification, the user clicks the message notification, and a display interface of an electronic device is switched from a full-screen display of a playback interface of a video application to a full-screen display of a dialog interface of the social application and a display of the playback interface of the video application by using a floating window, to obtain a display interface of the electronic device shown in b in FIG. 15. Two foreground applications that are the social application and the video application are included.

When the two foreground applications that are the social application and the video application are simultaneously displayed, the social application and the video application simultaneously perform rendering. Consequently, excessively high system load may be caused. The electronic device may perform rendering control on the social application and the video application based on a rendering priority of the social application and a rendering priority of the video application.

It should be noted that, in such a scenario, because the user performs switching from the full-screen display interface of the video application to the dialog box of the social application, to perform an operation such as viewing the message or replying to the message, the user focuses on the social application, determines a window corresponding to the social application as a focus window, and determines a window corresponding to the video application as a non-focus window.

For example, based on the operation such as viewing the message or replying to the message, it may be determined that the social application corresponds to the focus window and the video application corresponds to the non-focus window, a Vsync signal is sent to the video application at a first frequency, or sending a Vsync signal to the video application is stopped; in response to the operation, a Vsync signal to is sent to the social application at a second frequency, where the first frequency is less than the second frequency; a rendered image in the video application is composited with a rendered image in the social application, to obtain a target image; and the target image is displayed.

For example, initial rendering priorities set by the electronic device are 0 to 2 from high to low, and an initial rendering priority of a social interface and an initial rendering priority of the video application are respectively 2 and 1. When the two foreground applications that are a social application and the video application are simultaneously displayed, the window corresponding to the social application is the focus window. In this case, a rendering priority of the social application is decreased by 1 based on the initial rendering priority of the social application, and the rendering priority of the social application becomes 1. Because the window corresponding to the video application is the non-focus window, a rendering priority of the video application is increased by 1 based on the initial rendering priority of the video application, and the rendering priority of the video application becomes 2. A corresponding relationship between a foreground application and a rendering priority may be shown in Table 3.

**Table 3 Corresponding relationship between a foreground application and a rendering priority**

| Application | Initial rendering priority | Switched-in/out | Whether a window is a focus window | Change in a z-order | Rendering priority |
|---|---|---|---|---|---|
| Social application | 2 | 0 | -1 | 0 | 1 |
| Video application | 1 | 0 | +1 | 0 | 2 |

It can be seen from Table 3 that the rendering priority of the social application and the rendering priority of the video application are adjusted, and the rendering priority of the social application is higher than the rendering priority of the video application. In this case, rendering by the video application may be limited, and the social application performs rendering based on an original Vsync cycle, so that the display interface of the social application that the user focuses on can be refreshed smoothly, thereby improving user experience.

In this embodiment of this application, a Vsync signal is sent to an application in a focus window at an original frequency; and a sending frequency of a Vsync signal to an application in a non-focus window is reduced, or sending a Vsync signal to an application in a non-focus window is stopped, so that the application in the focus window can have sufficient rendering resources, thereby improving smoothness of the application in the focus window.

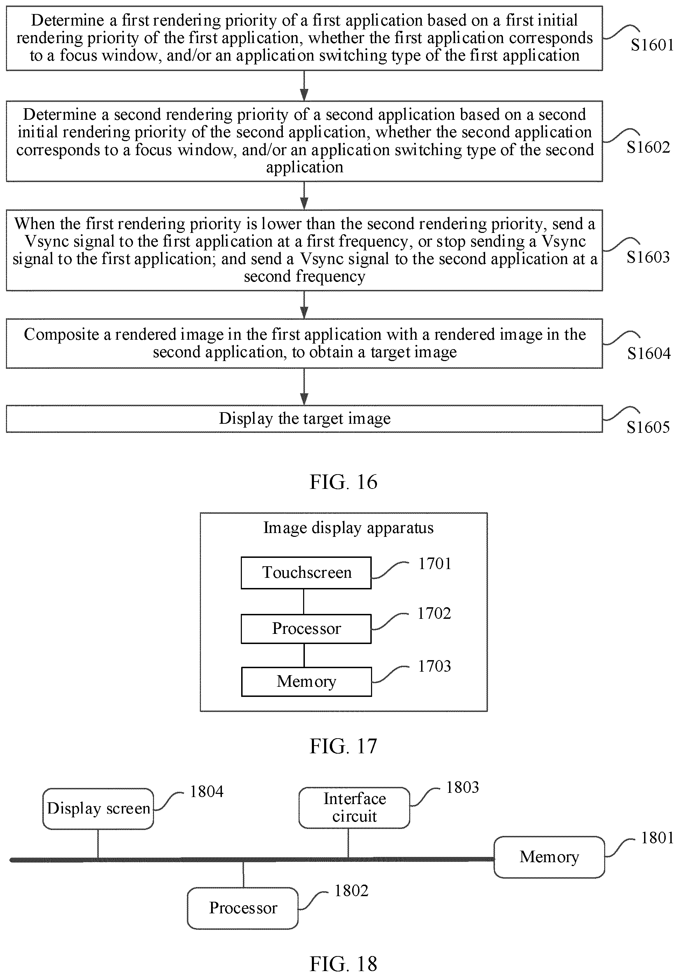

For example, FIG. 16 is a schematic flowchart of an image display method according to an embodiment of this application. The method shown in FIG. 16 may be executed by the electronic device 100 shown in FIG. 1. As shown in FIG. 16, the method includes the following steps.

S1601: Determine a first rendering priority of a first application based on a first initial rendering priority of the first application, whether the first application corresponds to a focus window, and/or an application switching type of the first application.

The first initial rendering priority is related to the application type of the first application and/or rendering load of the first application.

In this embodiment of this application, different applications may have different initial rendering priorities. For example, the initial rendering priorities may be classified into high-medium-low. For example, the initial rendering priorities may be set to 0 to 2 in sequence from high to low, the initial rendering priority corresponds to 0 when the initial rendering priority is high, the initial rendering priority corresponds to 1 when the initial rendering priority is medium, and the initial rendering priority corresponds to 2 when the initial rendering priority is low. Certainly, the initial rendering priorities may alternatively be set to 0 to 2 in sequence from low to high, the initial rendering priority corresponds to 2 when the initial rendering priority is high, the initial rendering priority corresponds to 1 when the initial rendering priority is medium, and the initial rendering priority corresponds to 0 when the initial rendering priority is low. The classification of the initial rendering priorities is not specifically limited in this embodiment of this application.

In a possible implementation, the initial rendering priority may be set based on an application type of the application. Specifically, an initial rendering priority of a system application may be set to be higher than an initial rendering priority of a third party application. For example, the system application may include a desktop launcher, a system user interface, or the like, and the third party application may include WeChat, Toutiao, or the like.

In another possible implementation, the initial rendering priority may be set based on rendering load of the application. Specifically, an initial rendering priority of an application with heavy rendering load may be set to be higher than an initial rendering priority of an application with light rendering load. For example, rendering load of the game application is heavier than rendering load of the social application, and an initial rendering priority of the game application is set to be higher than an initial rendering priority of the social application.

In another possible implementation, the initial rendering priority may be set based on an application type of the application and rendering load of the application. Specifically, when application types of a plurality of applications are the same, the initial rendering priority may be set based on the rendering load of the application, and an initial rendering priority of an application with heavy rendering load may be set to be higher than an initial rendering priority of an application with light rendering load. For example, when two foreground applications are respectively a third party game application and a third party social application, when rendering load of the third party game application is heavier than rendering load of the third party social application, an initial rendering priority of the third party game application is set to be higher than an initial rendering priority of the third party social application.

In this embodiment of this application, the application switching type includes a switched-out application or a switched-in application. The switched-in application may be understood as an application that is switched into a foreground of the electronic device. The switched-out application may be understood as an application that is switched out of the foreground of the electronic device and is switched into a background of the electronic device.

For example, when a window corresponding to the first application is the focus window and/or the application switching type of the first application is a switched-in application, the first initial rendering priority of the first application is increased based on the first initial rendering priority of the first application. When a window corresponding to the first application is the non-focus window and/or the application switching type of the first application is a switched-out application, the first initial rendering priority of the first application is decreased, to obtain the first rendering priority of the first application.

S 1602: Determine a second rendering priority of a second application based on a second initial rendering priority of the second application, whether the second application corresponds to a focus window, and/or an application switching type of the second application.

The second initial rendering priority is related to the application type of the second application and/or rendering load of a to-be-displayed interface of the second application. For descriptions of the second initial rendering priority, refer to the descriptions in step S1501. Details are not described herein again.

It should be noted that, the first application and the second application are applications running in a foreground of the electronic device.

S1603: When the first rendering priority is lower than the second rendering priority, send a Vsync signal to the first application at a first frequency, or stop sending a Vsync signal to the first application; and send a Vsync signal to the second application at a second frequency.

The first frequency is less than the second frequency, and the first frequency may be understood as a frequency obtained after the second frequency is decreased.

In this embodiment of this application, the rendering priority may be used to perform different degrees of rendering control on a plurality of foreground applications. For example, when the plurality of foreground applications perform rendering, a higher rendering priority of the foreground application leads to more computing resources provided, so that smoothness of a foreground application with a high rendering priority can be improved.

For example, rendering priorities may be classified into high-medium-low. For example, the rendering priorities may be set to 0 to 2 in sequence from high to low, the rendering priority corresponds to 0 when the rendering priority is high, the rendering priority corresponds to 1 when the rendering priority is medium, and the rendering priority corresponds to 2 when the rendering priority is low. Certainly, rendering priorities may alternatively be set to 0 to 2 in sequence from low to high, the rendering priority corresponds to 2 when the rendering priority is high, the rendering priority corresponds to 1 when the rendering priority is medium, and the rendering priority corresponds to 0 when the rendering priority is low.

It should be noted that, the classification of the rendering priorities is not specifically limited in this embodiment of this application.

For example, when the first rendering priority of the first application is lower than the second rendering priority of the second application, the Vsync signal is sent to the second application at the second frequency, and sending the Vsync signal to the first application is stopped, or a frequency of sending the Vsync signal to the first application is decreased to a first frame rate based on the second frequency.

S1604: Composite a rendered image in the first application with a rendered image in the second application, to obtain a target image.

For example, the Vsync signal is sent to the first application at the first frequency, or sending the Vsync signal to the first application is stopped, and the first application performs rendering, to obtain the rendered image in the first application; and the Vsync signal is sent to the second application at the second frequency, and the second application performs rendering, to obtain the rendered image in the second application. The rendered image in the first application is composited with the rendered image in the second application, to obtain the target image.

S1605: Display the target image.

For example, an interface obtained after the first application and the second application are composited is displayed on a screen of the electronic device. The interface obtained after the composition is the target image obtained after the rendered image in the first application is composited with the rendered image in the second application.

In the image display method provided in this embodiment of this application, a first application and a second application are applications running in a foreground of an electronic device, and a first rendering priority of the first application is determined based on a first initial rendering priority of the first application, whether the first application corresponds to a focus window, and/or an application switching type of the first application; a second rendering priority of the second application is determined based on a second initial rendering priority of the second application, whether the second application corresponds to a focus window, and/or an application switching type of the second application; when the first rendering priority is lower than the second rendering priority, a Vsync signal is sent to the first application at a first frequency, or sending a Vsync signal to the first application is stopped; and a Vsync signal is sent to the second application at a second frequency, where the first frequency is less than the second frequency; a rendered image in the first application is composited with a rendered image in the second application, to obtain a target image; and the target image is displayed. In this method, the first rendering priority of the first application is compared with the second rendering priority of the second application. For a foreground application with a relatively low rendering priority, a frequency of sending a Vsync signal is decreased or sending a Vsync signal is stopped; and for a foreground application with a relatively high rendering priority, an original frequency of sending a Vsync signal is maintained, thereby improving smoothness of the foreground application with the relatively high rendering priority, and improving user experience.

For example, based on the foregoing embodiment, the image display method further includes:

In a possible implementation, the electronic device is in a foreground application switching scenario, the first application is a switched-out application, and the second application is a switched-in application.

For example, the determining a first rendering priority of a first application includes: determining the first rendering priority of the first application based on the first initial rendering priority of the first application and the application switching type of the first application; and the determining a second rendering priority of a second application includes: determining the second rendering priority of the second application based on the second initial rendering priority of the second application and the application switching type of the second application.

When the electronic device is in a foreground application switching scenario, the first rendering priority of the first application is determined based on the first initial rendering priority of the first application and the application switching type of the first application; and the second rendering priority of the second application is determined based on the second initial rendering priority of the second application and the application switching type of the second application, so that the first rendering priority can be compared with the second rendering priority, to determine a rendering control method for the first application and the second application.

In a possible implementation, the determining the first rendering priority of the first application based on the first initial rendering priority of the first application and the application switching type of the first application includes: decreasing the first initial rendering priority of the first application based on that the first application is the switched-out application, to obtain the first rendering priority of the first application; and the determining the second rendering priority of the second application based on the second initial rendering priority of the second application and the application switching type of the second application includes: increasing the second initial rendering priority of the second application based on that the second application is the switched-in application, to obtain the second rendering priority of the second application.

For example, to improve smoothness of an application switched from a background to a foreground, the first initial rendering priority of the first application is decreased based on that the first application is the switched-out application, to obtain the first rendering priority of the first application; and the second rendering priority of the second application is increased based on that the second application is the switched-in application, to obtain the second rendering priority of the second application, so that the first rendering priority can be compared with the second rendering priority, to determine a rendering control method for the first application and the second application.

In a possible implementation, based on an initial rendering priority of each application, for an application to be switched out, an initial rendering priority of the application to be switched out is increased by 1, and for an application to be switched in, an initial rendering priority of the application to be switched in is decreased by 1.

For example, initial rendering priorities set by the electronic device are 0 to 2 from high to low, an initial rendering priority of a social interface and an initial rendering priority of Launcher are 2 and 1 respectively. In a process of returning from the social interface to a system desktop, a rendering priority of Launcher is decreased by 1 based on the initial rendering priority of Launcher, the rendering priority of Launcher becomes 0, a rendering priority of a social application is increased by 1 based on the initial rendering priority of the social application, and the rendering priority of the social application becomes 3.

In a possible implementation, the electronic device is in a split-screen display scenario, and the first application and the second application are respectively displayed in two different windows.

For example, the determining a first rendering priority of a first application includes: determining the first rendering priority of the first application based on the first initial rendering priority of the first application and whether the first application corresponds to the focus window; and the determining a second rendering priority of a second application includes: determining the second rendering priority of the second application based on the second initial rendering priority of the second application and whether the second application corresponds to the focus window.

When the electronic device is in a split-screen display scenario, the first application and the second application are respectively displayed in two different windows, and the two different windows may respectively correspond to a focus window and a non-focus window. Specifically, when the first application corresponds to the focus application, the second application corresponds to the non-focus application; or when the first application corresponds to the non-focus application, the second application corresponds to the focus application.

For example, the first rendering priority of the first application is determined based on the first initial rendering priority of the first application and whether the first application corresponds to the focus window; and the second rendering priority of the second application is determined based on the second initial rendering priority of the second application and whether the second application corresponds to the focus window, so that the first rendering priority can be compared with the second rendering priority, to determine a rendering control method for the first application and the second application.

In a possible implementation, the determining the first rendering priority of the first application based on the first initial rendering priority of the first application and whether the first application corresponds to the focus window includes: decreasing the first initial rendering priority of the first application based on that the first application corresponds to a non-focus window, to obtain the first rendering priority of the first application; and the determining the second rendering priority of the second application based on the second initial rendering priority of the second application and whether the second application corresponds to the focus window includes: increasing the second initial rendering priority of the second application based on that the second application corresponds to the focus window, to obtain the second rendering priority of the second application.

In this embodiment of this application, the focus window is a window that the user focuses more on. To improve smoothness of the focus window, the first initial rendering priority of the first application is decreased based on that the first application corresponds to the non-focus window, to obtain the first rendering priority of the first application. The second initial rendering priority of the second application is increased based on that the second application corresponds to the focus window, to obtain the second rendering priority of the second application.

The focus window may be determined based on an operation of the user. For example, when two foreground applications are displayed in a split-screen manner, the user performs a touch operation on an upper half of a screen, a foreground application displayed in the upper half of the screen is the focus window, and a foreground application displayed in a lower half of the screen is the non-focus window.

In a possible implementation, based on an initial rendering priority of each application, for an application corresponding to the focus window, an initial rendering priority of the application corresponding to the focus window is increased by 1, and for an application corresponding to the non-focus window, an initial rendering priority of the application corresponding to the non-focus window is decreased by 1.

For example, initial rendering priorities set by a terminal device are 0 to 2 from high to low, and a display interface of the terminal device includes a PPT application and a word application. An initial rendering priority of the word application and an initial rendering priority of the PPT application are both 2, a PPT file is displayed in an upper half window of a screen, and a word document is displayed in a lower half window of the screen. A user edits the PPT file based on the word document. In this case, the user performs a touch operation on the upper half window of the screen, thereby determining that the upper half window is a focus window. Because a window corresponding to the PPT application is the focus window, a rendering priority of the PPT application is decreased by 1 based on the initial rendering priority of the PPT application, and the rendering priority of the PPT application becomes 1. Because a window corresponding to the word application is a non-focus window, a rendering priority of the word application is increased by 1 based on the initial rendering priority of the word application, and the rendering priority of the word application becomes 3.

In this embodiment of this application, for an application displayed in the focus window, an initial rendering priority corresponding to the application is increased, and for an application displayed in the non-focus window, an initial rendering priority corresponding to the application is decreased, so that smoothness of the application displayed in the focus window can be improved.

In a possible implementation, the electronic device is in a floating window display scenario.

For example, the determining a first rendering priority of a first application includes: determining the first rendering priority of the first application based on the first initial rendering priority of the first application and whether the first application corresponds to the focus window; and the determining a second rendering priority of a second application includes: determining the second rendering priority of the second application based on the second initial rendering priority of the second application and whether the second application corresponds to the focus window.

In this embodiment of this application, when the electronic device is in the floating window display scenario, for the two applications running in a foreground, when an application type of the first application is a switched-in application, an application type of the second application is a switched-out application; or when an application type of the first application is a switched-out application, an application type of the second application is a switched-in application. When the first application corresponds to the focus application, the second application corresponds to the non-focus application; or when the first application corresponds to the non-focus application, the second application corresponds to the focus application.

For example, the first rendering priority of the first application is determined based on the first initial rendering priority of the first application and whether the first application corresponds to the focus window; and the second rendering priority of the second application is determined based on the second initial rendering priority of the second application and whether the second application corresponds to the focus window, so that the first rendering priority can be compared with the second rendering priority, to determine a rendering control method for the first application and the second application.

In a possible implementation, the determining the first rendering priority of the first application based on the first initial rendering priority of the first application and whether the first application corresponds to the focus window includes: decreasing the first initial rendering priority of the first application based on that the first application corresponds to a non-focus window, to obtain the first rendering priority of the first application; and the determining the second rendering priority of the second application based on the second initial rendering priority of the second application and whether the second application corresponds to the focus window includes: increasing the second initial rendering priority of the second application based on that the second application corresponds to the focus window, to obtain the second rendering priority of the second application.

In this embodiment of this application, the focus window is a window that the user focuses more on. To improve smoothness of the focus window, the first initial rendering priority of the first application is decreased based on that the first application corresponds to a non-focus window, to obtain the first rendering priority of the first application; and the second initial rendering priority of the second application is increased based on that the second application corresponds to the focus window, to obtain the second rendering priority of the second application.

The focus window may be determined based on an operation of the user. For example, when two applications are running in a foreground, an application 2 is displayed in full screen on a screen of the electronic device, and the application 1 is displayed on the application 2 by using a floating window. If the user performs a touch operation on the application 2, the application 2 corresponds to the focus window, and the application 1 corresponds to the non-focus window.

For example, initial rendering priorities set by the electronic device are 0 to 2 from high to low, and an initial rendering priority of a social interface and an initial rendering priority of a video application are respectively 2 and 1. When the two foreground applications that are a social application and the video application are simultaneously displayed, the social application is displayed in full screen on the screen of the electronic device, and the video application is displayed on the social application by using a floating window. Because the user performs an operation such as replying to a message in a dialog box of the social application, a window corresponding to the social application is a focus window. In this case, a rendering priority of the social application is decreased by 1 based on the initial rendering priority of the social application, and the rendering priority of the social application becomes 1. Because a window corresponding to the video application is the non-focus window, a rendering priority of the video application is increased by 1 based on the initial rendering priority of the video application, and the rendering priority of the video application becomes 2.

In a possible implementation, before the determining the first rendering priority of the first application and determining the second rendering priority of the second application, the method further includes: obtaining a rendering area of the first application and a rendering area of the second application; and the determining the first rendering priority of the first application and the second rendering priority of the second application includes: when the rendering area of the first application and the rendering area of the second application are both greater than a first preset value, determining the first rendering priority of the first application, and determining the second rendering priority of the second application.

In this embodiment of this application, a size of the rendering area may be used to represent a size of rendering load.

For example, when the first application and the second application simultaneously run in the foreground, when the rendering area of the first application and the rendering area of the second application are both larger than the first preset value, the rendering load of the system is relatively large, thereby affecting smoothness of the first application and/or the second application. Therefore, when the rendering area of the first application and the rendering area of the second application are both greater than the first preset value, the first rendering priority of the first application and the second rendering priority of the second application are determined. Rendering control is performed on the first application and the second application based on the first rendering priority and the second rendering priority, thereby decreasing the rendering load of the system, and improving application smoothness.

In a possible implementation, before the determining the first rendering priority of the first application and determining the second rendering priority of the second application, the method further includes: obtaining window information of applications running in the foreground and/or switching information of the applications running in the foreground; and determining, based on the window information of the applications running in the foreground and/or the switching information of the applications running in the foreground, that the applications running in the foreground include the first application and the second application.

In this embodiment of this application, the window information may be understood as that each application has a corresponding window interface during running, and each window interface has respective corresponding information and data. The information and data may include attribute information such as a window size, a window position, and a window layout. For example, WeChat has a corresponding WeChat window interface during running, WeChat window information may include information such as a position of each button and a size of a dialog box.

In this embodiment of this application, the switching information of the application running in the foreground may be understood as that when a foreground application on the electronic device is switched, information may be generated, to track and manage the switching of the foreground application. For example, when the foreground application is switched from a social application to a game application, the switching information of the application running in the foreground is generated.

For example, it may be determined, based on the window information of the application running in the foreground and/or the switching information of the application running in the foreground, that the applications running in the foreground include the first application and the second application. When it is determined that the applications running in the foreground include the first application and the second application, the first rendering priority of the first application is compared with the second rendering priority of the second application, to perform rendering control on the first application and the second application, thereby improving application smoothness. When it is determined that the application running in the foreground includes the first application instead of the second application, the first rendering priority of the first application does not need to be obtained, so that system resources can be saved.

Implementations described in the foregoing example embodiments do not represent all implementations consistent with this application. On the contrary, the implementations are merely examples of the method that are consistent with some aspects of this application described in detail in the appended claims.

The foregoing describes the image display method in the embodiments of this application. The following describes an electronic device for executing the image display method provided in the embodiments of this application. A person skilled in the art may understand that the method and the apparatus may be mutually combined and referenced. The electronic device provided in the embodiments of this application may perform the steps in the image display method.

FIG. 17 is a schematic diagram of a structure of an image display apparatus according to an embodiment of this application. As shown in FIG. 17, the image display apparatus may be an electronic device in embodiments of this application. The image display apparatus includes: a touchscreen 1701, where the touchscreen includes a touch panel and a display screen; one or more processors 1702; a memory 1703; a plurality of application programs; and one or more computer programs, where the one or more computer programs are stored in the memory 1703, the one or more computer programs include instructions, and when the instructions are executed by the image display apparatus, the image display method in the foregoing embodiment is implemented.

FIG. 18 is a schematic diagram of a hardware structure of an image display apparatus according to an embodiment of this application. As shown in FIG. 18, the apparatus includes: a memory 1801, a processor 1802, and a display screen 1804. The apparatus may further include an interface circuit 1803. The memory 1801, the processor 1802, the interface circuit 1803, and the display screen 1804 may perform communication. For example, the memory 1801, the processor 1802, the interface circuit 1803, and the display screen 1804 may perform communication through a communication bus. The memory 1801 is configured to store computer-executable instructions, the processor 1802 controls execution, and the display screen 1804 performs displaying, to implement the image display method provided in the following embodiments of this application.

In a possible implementation, the computer-executable instructions in this embodiment of this application may alternatively be referred to as application program code. This is not specifically limited in this embodiment of this application.

Optionally, the interface circuit 1803 may further include a transmitter and/or a receiver. Optionally, the processor 1802 may include one or more CPUs, or may be another general-purpose processor, a digital signal processor (digital signal processor, DSP), an application-specific integrated circuit (application specific integrated circuit, ASIC), or the like. The general-purpose processor may be a microprocessor, or the processor may be any conventional processor or the like. The steps of the methods disclosed with reference to this application may be directly implemented by a hardware processor, or may be implemented by a combination of hardware and a software module in a processor.

The apparatus in this embodiment may be accordingly configured to perform the steps in the method embodiment, implementation principles and technical effects of the apparatus are similar to those of the method embodiment, and details are not described herein again.

An embodiment of this application further provides a computer-readable storage medium. All or some of methods in the foregoing embodiments may be implemented by using software, hardware, firmware, or any combination thereof. If implemented in software, a function may be stored on or transmitted on a computer readable medium as one or more instructions or code. The computer-readable medium may include a computer storage medium and a communication medium, and may further include any medium that can transmit a computer program from one place to another. The storage medium may be any target medium accessible to a computer.

In a possible implementation, the computer readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of an instruction or a data structure, and may be accessed by a computer. Furthermore, any connection is appropriately referred to as a computer readable medium. For example, if software is transmitted from a website, a server or another remote source by using a coaxial cable, an optical fiber cable, a twisted pair, a digital subscriber line (Digital Subscriber Line, DSL) or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. The foregoing combination should also be included in the scope of the computer-readable medium.

The embodiments of this application are described with reference to the flowcharts and/or block diagrams of the method, the device (system), and the computer program product according to the embodiments of this application. It should be understood that computer program instructions can implement each procedure and/or block in the flowcharts and/or block diagrams and a combination of procedures and/or blocks in the flowcharts and/or block diagrams. These computer program instructions may be provided for a general-purpose computer, a dedicated computer, an embedded processor, or a processing unit of any other programmable data processing device to generate a machine, so that the instructions executed by a computer or a processing unit of any other programmable data processing device generate an apparatus for implementing a specific function in one or more processes in the flowcharts and/or in one or more blocks in the block diagrams.

The foregoing specific implementations further describe the objectives, technical solutions in detail, and beneficial effects of the present invention. It should be appreciated that the foregoing descriptions are merely specific implementations of the present invention, but are not intended to limit the protection scope of the present invention. Any modification, equivalent replacement, or improvement made based on the technical solutions of the present invention should fall within the protection scope of the present invention.

## Claims

1. An image display method, applied to an electronic device, wherein the method comprises:
determining a first rendering priority of a first application based on a first initial rendering priority of the first application, whether the first application corresponds to a focus window, and/or an application switching type of the first application, wherein the first initial rendering priority is related to an application type of the first application and/or rendering load of the first application, and the application switching type comprises a switched-out application or a switched-in application;
determining a second rendering priority of a second application based on a second initial rendering priority of the second application, whether the second application corresponds to a focus window, and/or an application switching type of the second application, wherein the second initial rendering priority is related to an application type of the second application and/or rendering load of a to-be-displayed interface of the second application; and
the first application and the second application are applications running in a foreground of the electronic device;
when the first rendering priority is lower than the second rendering priority, sending a vertical synchronization signal Vsync signal to the first application at a first frequency, or stopping sending a Vsync signal to the first application; and sending a Vsync signal to the second application at a second frequency, wherein the first frequency is less than the second frequency;
compositing a rendered image in the first application with a rendered image in the second application, to obtain a target image; and
displaying the target image.

2. The method according to claim 1, wherein the electronic device is in a foreground application switching scenario, the first application is a switched-out application, and the second application is a switched-in application;
the determining a first rendering priority of a first application comprises:
determining the first rendering priority of the first application based on the first initial rendering priority of the first application and the application switching type of the first application; and
the determining a second rendering priority of a second application comprises:
determining the second rendering priority of the second application based on the second initial rendering priority of the second application and the application switching type of the second application.

3. The method according to claim 2, wherein the determining the first rendering priority of the first application based on the first initial rendering priority of the first application and the application switching type of the first application comprises:
decreasing the first initial rendering priority of the first application based on that the first application is the switched-out application, to obtain the first rendering priority of the first application; and
the determining the second rendering priority of the second application based on the second initial rendering priority of the second application and the application switching type of the second application comprises:
increasing the second initial rendering priority of the second application based on that the second application is the switched-in application, to obtain the second rendering priority of the second application.

4. The method according to claim 1, wherein the electronic device is in a split-screen display scenario, and the first application and the second application are respectively displayed in two different windows;
the determining a first rendering priority of a first application comprises:
determining the first rendering priority of the first application based on the first initial rendering priority of the first application and whether the first application corresponds to the focus window; and
the determining a second rendering priority of a second application comprises:
determining the second rendering priority of the second application based on the second initial rendering priority of the second application and whether the second application corresponds to the focus window.

5. The method according to claim 4, wherein the determining the first rendering priority of the first application based on the first initial rendering priority of the first application and whether the first application corresponds to the focus window comprises:
decreasing the first initial rendering priority of the first application based on that the first application corresponds to a non-focus window, to obtain the first rendering priority of the first application; and
the determining the second rendering priority of the second application based on the second initial rendering priority of the second application and whether the second application corresponds to the focus window comprises:
increasing the second initial rendering priority of the second application based on that the second application corresponds to the focus window, to obtain the second rendering priority of the second application.

6. The method according to claim 1, wherein the electronic device is in a floating window display scenario;
the determining a first rendering priority of a first application comprises:
determining the first rendering priority of the first application based on the first initial rendering priority of the first application and whether the first application corresponds to the focus window; and
the determining a second rendering priority of a second application comprises:
determining the second rendering priority of the second application based on the second initial rendering priority of the second application and whether the second application corresponds to the focus window.

7. The method according to claim 6, wherein the determining the first rendering priority of the first application based on the first initial rendering priority of the first application and whether the first application corresponds to the focus window comprises:
decreasing the first initial rendering priority of the first application based on that the first application corresponds to a non-focus window, to obtain the first rendering priority of the first application; and
the determining the second rendering priority of the second application based on the second initial rendering priority of the second application and whether the second application corresponds to the focus window comprises:
increasing the second initial rendering priority of the second application based on that the second application corresponds to the focus window, to obtain the second rendering priority of the second application.

8. The method according to any one of claims 1 to 7, before the determining the first rendering priority of the first application and determining the second rendering priority of the second application, further comprising:
obtaining a rendering area of the first application and a rendering area of the second application; and
the determining the first rendering priority of the first application and the second rendering priority of the second application comprises: when the rendering area of the first application and the rendering area of the second application are both greater than a first preset value, determining the first rendering priority of the first application, and determining the second rendering priority of the second application.

9. The method according to any one of claims 1 to 8, before the determining the first rendering priority of the first application and determining the second rendering priority of the second application, further comprising:
obtaining window information of applications running in the foreground and/or switching information of the applications running in the foreground; and
determining, based on the window information of the applications running in the foreground and/or the switching information of the applications running in the foreground, that the applications running in the foreground comprise the first application and the second application.

10. An image display method, applied to an electronic device, wherein the method comprises:
displaying a multitasking interface, wherein the multitasking interface comprises a first application and a second application;
receiving a first operation of a user, wherein the first operation is used to switch the first application in and the second application out;
in response to the first operation, sending a vertical synchronization signal Vsync signal to the first application at a first frequency, or stopping sending a Vsync signal to the first application;
in response to the first operation, sending a Vsync signal to the second application at a second frequency, wherein the first frequency is less than the second frequency;
compositing a rendered image in the first application with a rendered image in the second application, to obtain a target image; and
displaying the target image.

11. An image display method, applied to an electronic device, wherein the method comprises:
displaying a first interface, wherein the first interface comprises a first application;
receiving a second operation performed by a user to display the first application and a second application in a split-screen manner;
in response to the second operation, displaying the first application in a first window and the second application in a second window;
receiving a third operation on the second application in the second window;
in response to the third operation, sending a vertical synchronization signal Vsync signal to the first application at a first frequency, or stopping sending a Vsync signal to the first application;
in response to the second operation, sending a Vsync signal to the second application at a second frequency, wherein the first frequency is less than the second frequency;
compositing a rendered image in the first application with a rendered image in the second application, to obtain a target image; and
displaying the target image.

12. An image display method, applied to an electronic device, wherein the method comprises:
displaying a first application in full screen;
receiving a fourth operation for triggering a second application;
in response to the fourth operation, displaying the second application in full screen, and displaying the first application on the second application by using a floating window;
receiving a fifth operation on the second application;
in response to the fifth operation, sending a vertical synchronization signal Vsync signal to the first application at a first frequency, or stopping sending a Vsync signal to the first application;
in response to the fifth operation, sending a Vsync signal to the second application at a second frequency, wherein the first frequency is less than the second frequency;
compositing a rendered image in the first application with a rendered image in the second application, to obtain a target image; and
displaying the target image.

13. An image display method, applied to an electronic device, wherein the method comprises:
receiving a sixth operation of a user returning from a first application to a desktop application;
in response to the sixth operation, sending a vertical synchronization signal Vsync signal to the first application at a first frequency, or stopping sending a Vsync signal to the first application;
in response to the sixth operation, sending a Vsync signal to the desktop application at a second frequency, wherein the first frequency is less than the second frequency;
compositing a rendered image in the first application with a rendered image in the desktop application, to obtain a target image; and
displaying the target image.

14. An electronic device, comprising: a processor and a memory, wherein the processor is configured to invoke a program in the memory, to enable the electronic device to perform the method according to any one of claims 1 to 13.

15. A computer-readable storage medium, wherein the computer-readable storage medium stores a computer program, and when the computer program is executed by a processor, the method according to any one of claims 1 to 13 is implemented.

16. A computer program product, comprising a computer program, wherein when the computer program is run, a computer is enabled to perform the method according to any one of claims 1 to 13.
